# EUROPEAN PATENT APPLICATION

(11) **EP 4 836 542 A1**
(43) Date of publication of application: **04.11.2026**
(21) Application number: 23962855.5
(22) Date of filing: 29.12.2023
(51) Int. Cl.: H04W 52/18

(54) **POWER INDICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); LI, Dexin, Dongguan, Guangdong 523860 (CN); TIAN, Wenqiang, Dongguan, Guangdong 523860 (CN)
(74) Representative: Taor, Simon Edward William
(86) International application number: PCT/CN2023/143473
(87) International publication number: WO 2025/138181

(57) **Abstract**

A power indication method, a terminal device, and a network device are provided. The power indication method includes: a first terminal device receives first indication information, the first indication information indicating a first DMRS and/or power information of the first DMRS; the first terminal device sends and/or receives data according to the first indication information. This disclosure can flexibly adjust the DMRS transmission power according to different situations, thereby better matching the current transmission environment and requirements, and improving performance.

## Description

### TECHNICAL FIELD

This disclosure relates to the field of communication, and particularly relates to a power indication method, a terminal device, and a network device.

### BACKGROUND

In a communication system, to increase resources used for data transmission and improve the data transmission rate, a transmission scheme has been proposed in which a demodulation reference signal (DMRS) and a data signal can be transmitted on the same resource element (RE). In this scheme, how to provide a dynamic power indication solution for the reference signal is a technical problem that needs to be addressed.

### SUMMARY

Embodiments of the disclosure provide a power indication method, a terminal device, and a network device, which can flexibly adjust DMRS transmission power according to different situations, thereby better matching a current transmission environment and requirements and improving performance.

An embodiment of the disclosure provides a power indication method. The method includes the following. A first terminal device receives first indication information, where the first indication information indicates a first DMRS and/or power information of the first DMRS. The first terminal device sends and/or receives data according to the first indication information.

An embodiment of the disclosure provides a power indication method. The method includes the following. A first network device or a second terminal device sends first indication information, where the first indication information indicates a first DMRS and/or power information of the first DMRS.

An embodiment of the disclosure provides a first terminal device. The first terminal device includes a first transceiver module configured to receive first indication information, and send and/or receive data according to the first indication information. The first indication information indicates a first DMRS and/or power information of the first DMRS.

An embodiment of the disclosure provides a first network device. The first network device includes a second transceiver module configured to send first indication information. The first indication information indicates a first DMRS and/or power information of the first DMRS.

An embodiment of the disclosure provides a second terminal device. The second terminal device includes a third transceiver module configured to send first indication information. The first indication information indicates a first DMRS and/or power information of the first DMRS.

An embodiment of the disclosure provides a communication device. The communication device a processor, a memory, and a transceiver. The memory is configured to store a computer program, and the processor is configured to invoke and run the computer program stored in the memory and control the transceiver, so that the device performs the above-mentioned power indication method.

An embodiment of the disclosure provides a chip for implementing the above-mentioned power indication method. Specifically, the chip includes a processor configured to invoke and run a computer program from a memory, so that a device equipped with the chip performs the above-mentioned power indication method.

An embodiment of the disclosure provides a computer-readable storage medium configured to store a computer program, when the computer program is run by a device, the device performs the above-mentioned power indication method.

An embodiment of the disclosure provides a computer program product, including computer program instructions, the computer program instructions cause a computer to perform the above-mentioned power indication method.

An embodiment of the disclosure provides a computer program, when the computer program runs on a computer, it causes the computer to perform the above-mentioned power indication method.

In the embodiments of the disclosure, by using first indication information to indicate power information of a first DMRS, the DMRS transmission power can be flexibly adjusted according to different situations, thereby better matching a current transmission environment and requirements and improving performance.

### BRIEF DESCRIPTION OF THE DRAWINGS

FIG. 1 exemplarily shows a communication system 100.
FIG. 2 is a schematic flowchart of a power indication method 200 according to an embodiment of the disclosure.
FIG. 3 is a schematic flowchart of a power indication method 300 according to an embodiment of the disclosure.
FIG. 4 is a schematic block diagram of a first terminal device 400 according to an embodiment of the disclosure.
FIG. 5 is a schematic block diagram of a first network device 500 according to an embodiment of the disclosure.
FIG. 6 is a schematic block diagram of a second terminal device 600 according to an embodiment of the disclosure.
FIG. 7 is a schematic structural diagram of a communication device 700 according to an embodiment of the disclosure.
FIG. 8 is a schematic structural diagram of a chip 800 according to an embodiment of the disclosure.

### DETAILED DESCRIPTION

The technical solutions in the embodiments of the disclosure will be described below with reference to the accompanying drawings in the embodiments of the disclosure.

The technical solutions of the embodiments of the disclosure may be applied to various communication systems, for example, a long term evolution (LTE) system, an advanced long term evolution (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-Generation (5G) system, or other communication systems.

Generally, a traditional communication system supports a limited number of connections and is easy to implement. However, with the development of communication technologies, a mobile communication system will support not only traditional communication but also, for example, device to device (D2D) communication, machine to machine (M2M) communication, machine type communication (MTC), vehicle to vehicle (V2V) communication, or vehicle to everything (V2X) communication. The embodiments of the disclosure may also be applied to these communication systems.

In an implementation manner, the communication system in the embodiments of the disclosure may be applied to a carrier aggregation (CA) scenario, a dual connectivity (DC) scenario, or a standalone (SA) networking scenario.

In an implementation manner, the communication system in the embodiments of the disclosure may be applied to an unlicensed spectrum, where the unlicensed spectrum may also be considered as a shared spectrum; or, the communication system in the embodiments of the disclosure may also be applied to a licensed spectrum, where the licensed spectrum may also be considered as a non-shared spectrum.

Various embodiments are described in conjunction with a network device and a terminal device. The terminal device may also be referred to as a user equipment (UE), an access terminal, a subscriber unit, a subscriber station, a mobile station, a mobile terminal, a remote station, a remote terminal, a mobile device, a user terminal, a terminal, a wireless communication device, a user agent, or a user apparatus.

The terminal device may be a station (ST) in a WLAN, may be a cellular phone, a cordless phone, a Session Initiation Protocol (SIP) phone, a wireless local loop (WLL) station, a personal digital assistant (PDA) device, a handheld device with wireless communication capability, a computing device or other processing device connected to a wireless modem, an in-vehicle device, a wearable device, a terminal device in a next-generation communication system such as an NR network, or a terminal device in a future evolved public land mobile network (PLMN) network.

In the embodiments of the disclosure, the terminal device may be deployed on land, including indoors or outdoors, handheld, wearable, or vehicle-mounted; may be deployed on water (such as on a ship, etc.); or may be deployed in the air (such as on an airplane, a balloon, or a satellite).

In the embodiments of the disclosure, the terminal device may be a mobile phone, a tablet computer (Pad), a computer with wireless transceiver functionality, a virtual reality (VR) terminal device, an augmented reality (AR) terminal device, a wireless terminal device in industrial control, a wireless terminal device in self-driving, a wireless terminal device in remote medical, a wireless terminal device in a smart grid, a wireless terminal device in transportation safety, a wireless terminal device in a smart city, or a wireless terminal device in a smart home.

By way of example and not limitation, in the embodiments of the disclosure, the terminal device may also be a wearable device. A wearable device, which may also be referred to as a wearable smart device, is a general term for devices that are developed by applying wearable technology to intelligently design everyday wearables, such as glasses, gloves, watches, clothing, and shoes. A wearable device is a portable device that is worn directly on the body or integrated into the user's clothing or accessories. A wearable device is not merely a hardware device; it also achieves powerful functions through software support, data interaction, and cloud interaction. In a broad sense, wearable smart devices include devices that are fully functional, large in size, and can achieve complete or partial functions without relying on a smartphone, such as smart watches or smart glasses, and devices that focus only on a specific type of application function and need to be used in conjunction with other devices like smartphones, such as various smart bracelets and smart jewelry for vital sign monitoring.

In the embodiments of the disclosure, the network device may be a device for communicating with a mobile device. The network device may be an access point (AP) in a WLAN, an evolutional Node B (eNB or eNodeB) in LTE, or a relay station or an access point, or an in-vehicle device, a wearable device, and a network device (gNB) in an NR network, or a network device in a future evolved PLMN network, or a network device in an NTN network.

By way of example and not limitation, in the embodiments of the disclosure, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station located on land, in water, or other locations.

In an embodiment of the disclosure, a network device may provide services for a cell. A terminal device communicates with the network device via transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include: a metro cell, a micro cell, a pico cell, a femto cell, etc. These small cells are characterized by small coverage and low transmit power, and are suitable for providing high-rate data transmission services.

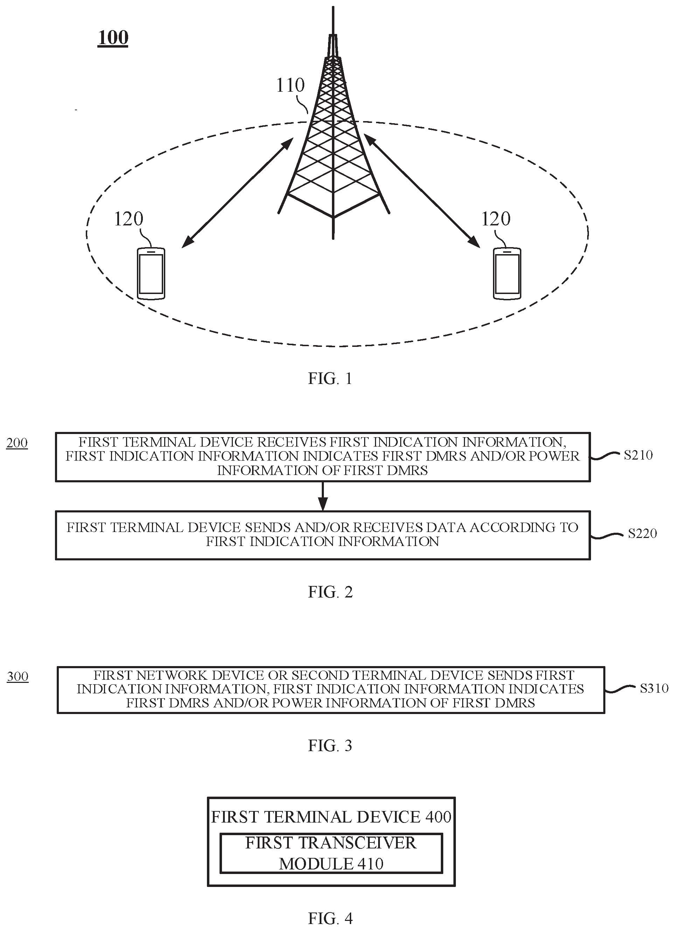

FIG. 1 exemplarily shows a communication system 100. The communication system includes one network device 110 and two terminal devices 120. In an implementation manner, the communication system 100 may include multiple network devices 110, and the coverage area of each network device 110 may have other numbers of terminal devices 120, which is not limited in the embodiments of the disclosure.

In an implementation manner, the communication system 100 may further include other network entities such as a mobility management entity (MME) and an access and mobility management function (AMF), which is not limited in the embodiments of the disclosure.

The network device may further include an access network device and a core network device. That is, the wireless communication system also includes multiple core networks for communicating with the access network device. The access network device may be an evolutional node B (eNB or e-NodeB) macro base station, a micro base station (also referred to as a "small base station"), a pico base station, an access point (AP), a transmission point (TP), or a new generation Node B (gNodeB) in a long-term evolution (LTE) system, a next radio (NR) system, or an authorized auxiliary access long-term evolution (LAA-LTE) system.

It should be understood that a device with communication functionality in a network/system in the embodiments of the disclosure may be referred to as a communication device. Taking the communication system shown in FIG. 1 as an example, communication devices may include network devices and terminal devices with communication functionality. The network devices and terminal devices may be the specific devices in the embodiments of the disclosure, which will not be described again here; the communication devices may also include other devices in the communication system, such as other network entities like a network controller and a mobility management entity, which are not limited in the embodiments of the disclosure.

It should be understood that the terms "system" and "network" are often used interchangeably herein. The term "and/or" herein is merely a description of an association relationship between associated objects, indicating that three relationships may exist. For example, A and/or B may represent: A alone exists, A and B exist simultaneously, and B alone exists. Additionally, the character "/" herein generally indicates that the associated objects are in an "or" relationship.

It should be understood that the "indication" mentioned in the embodiments of the disclosure may be a direct indication, an indirect indication, or an indication of having an associated relationship. For example, A indicating B may mean that A directly indicates B, such that B can be obtained through A; it may also mean that A indirectly indicates B, such that A indicates C, and B can be obtained through C; it may also mean that there is an associated relationship between A and B.

In the description of the embodiments of the disclosure, the term "correspondence" may indicate a direct or indirect correspondence between two items, or an association relationship between the two items, or a relationship such as indicating and being indicated, configuring and being configured.

To facilitate understanding of the technical solutions of the embodiments of the disclosure, the related technologies of the embodiments of the disclosure are described below. The following related technologies, as optional solutions, may be arbitrarily combined with the technical solutions of the embodiments of the disclosure and fall within the protection scope of the embodiments of the disclosure.

In a wireless communication system (e.g., WIFI, 4th-Generation (4G) LTE, 5G (NR), future 6th-Generation (6G), etc.), its basic workflow may include the following steps:

At a transmitting end, a bit stream information to be transmitted is subject to channel coding (and possibly corresponding rate matching) to obtain coded bits, which are then modulated to obtain modulation symbols (for example, modulation may employ one or more of binary phase shift keying (BPSK), quadrature phase shift keying (QPSK), 16 quadrature amplitude modulation (QAM), 64QAM, 256QAM, 512QAM, 1024QAM, 2048QAM, 4096QAM). Next, the modulation symbols and a demodulation reference signal (DMRS) are inserted into corresponding time-frequency resources (e.g., inserted into corresponding resource elements (REs)), and subsequently processed to obtain orthogonal frequency division multiplexing (OFDM) symbols, or single carrier frequency-division multiple access (SC-FDMA) symbols, or other forms of multi-carrier symbols.

At a receiving end, a receiver performs channel estimation through DMRS measurement, demodulates the modulation symbols, and then performs channel decoding to obtain the transmitted bits. The above steps may be combined for iteration (e.g., information obtained by a decoding module may be used for a module including channel estimation, and/or for a module including modulation symbol demodulation), and may not necessarily follow the strict sequential order described above.

The above process is similar for downlink transmission (DL transmission), i.e., transmission from the network to a terminal, uplink transmission (UL transmission), i.e., transmission from a terminal to the network, and sidelink transmission (SL transmission), i.e., transmission between terminals. To obtain the bit information transmitted by the transmitting end, the receiving end needs to use a demodulation reference signal. The transmission here may be either data transmission or control information transmission. For example, it may be a physical downlink shared channel (PDSCH), a physical uplink shared channel (PUSCH), a physical sidelink shared channel (PSSCH), a physical downlink control channel (PDCCH), a physical uplink control channel (PUCCH), a physical sidelink control channel (PSCCH), a physical sidelink feedback channel (PSFCH), a physical sidelink broadcast channel (PSBCH), etc. For simplicity of description in the subsequent text of this application, data is generally used for description, and this data includes not only general data to be transmitted (e.g., data transmitted in PDSCH) but also control information.

Due to the complexity and time-varying nature of the wireless channel environment, in the above systems, the receiver's estimation and recovery of the wireless channel directly affect the final data recovery performance. In traditional communication systems, generally, the DMRS of a control channel (i.e., a channel for transmitting control information) is relatively fixed, meaning its density and/or pattern does not need to change dynamically. In this case, the design of the DMRS tends to be conservative, i.e., it can adapt to various wireless channel environments. For a data channel (i.e., a channel for transmitting data), to reduce DMRS overhead, different DMRS densities and/or patterns are often designed, and the system configures or indicates which DMRS to use at the receiving end based on the current wireless channel environment.

In existing communication systems, DMRS and data occupy different REs respectively (i.e., there is no overlap on RE time-frequency resources). That is, at one RE position, either DMRS or data can be mapped, but DMRS and data cannot be mapped simultaneously. Therefore, data and DMRS are orthogonal (i.e., non-overlapping) in time-frequency resources. When a terminal (UE) is moving at a high speed, to improve channel estimation performance, DMRS often needs to occupy more symbols in the time domain, i.e., DMRS needs to occupy more RE resources. Consequently, the RE resources available for data will be reduced. It can be seen that when the total time-frequency transmission resources are fixed, an increase in resource overhead required for pilot signals (e.g., DMRS) means a decrease in resources used for data transmission, thus reducing the data transmission rate.

One way to address the above drawback is to allow the DMRS signal and the data signal to be transmitted on the same RE, i.e., one or more or all REs used for the DMRS are the same as those used by the data. In this case, an advanced receiver (e.g., an iterative receiver, an artificial intelligence/machine learning (AI/ML) receiver) can be used for processing to demodulate the data. The AI/ML receiver may employ various methods, for example, it may use deep learning algorithms, and may be implemented using one or a combination of fully convolutional networks (FCN), convolutional neural networks (CNN), recurrent neural networks (RNN), or the transformer neural network architecture. The above receivers are merely examples, and actual receivers are not necessarily limited to the above examples.

It should be noted that in a code division multiple access (CDMA) system, although a pilot signal (including DMRS) and a data signal (including a data signal related to control information) can be transmitted on the same time-frequency resources, both the pilot signal and the data signal need to undergo additional spreading processing. For example, the pilot signal and the data signal need to use different orthogonal codes for distinction; in other words, in CDMA in the related art, the pilot signal and the data signal transmitted on the same time-frequency resources are the spread pilot signal and data signal. However, the embodiments of the disclosure are mainly applied to OFDM systems/SC-FDMA systems and other systems based on multiple sub-carriers. The modulation symbols of the data signal (e.g., QPSK, 16QAM) and the modulation symbols of the demodulation pilot signal can be directly transmitted on the same time-frequency resources, without the need for additional spreading processing for the pilot signal and the data signal. That is, in the solutions provided in the subsequent embodiments of the disclosure, the pilot signal and the data signal transmitted on the same time-frequency resources may be the pilot signal and the data signal that have not undergone spreading processing.

A prerequisite for using the above-mentioned advanced receiver is that the receiving end needs to know the corresponding reference signal configuration; otherwise, it will lead to a mismatch between the receiver and the actual received signal, resulting in performance degradation. For the above-mentioned non-orthogonal DMRS, there is currently a lack of specific design methods. This disclosure provides a dynamic power indication scheme and different DMRS indication schemes for this type of reference signal.

Definitions of relevant concepts involved in the embodiments of the disclosure are as follows.

Resource Element (RE): An RE is the smallest time-frequency resource unit of a system. For example, in an NR or LTE system, one RE corresponds to one subcarrier in the frequency domain and one symbol in the time domain.

Resource Block (RB): An RB may refer to K consecutive subcarriers in the frequency domain. Additionally, in some systems, an RB may refer to K consecutive subcarriers in the frequency domain and M consecutive symbols in the time domain. For example, a typical value for K is 12, but other values are also possible, such as a power of 2, i.e., K can be 8, 16, or other values. A typical value for M can be one or more of 6, 7, 13, or 14. In the following description, no distinction is made between RB and physical resource block (PRB), and they may be collectively referred to as PRB.

Symbol: May correspond to one or more of the following: an OFDM symbol; an SC-FDMA symbol (also referred to as a DFT-s-OFDM symbol, or a multi-carrier symbol employing a transform precoder, or an OFDM symbol employing a transform precoder); other forms of multi-carrier symbols.

FIG. 2 is a schematic flowchart of a power indication method 200 according to an embodiment of the disclosure. The method may optionally be applied to the system shown in FIG. 1, but is not limited thereto. The method includes at least part of the following content.

S210: A first terminal device receives first indication information, where the first indication information indicates a first DMRS and/or power information of the first DMRS.

S220: The first terminal device sends and/or receives data according to the first indication information.

The first indication information may be sent by a first network device or a second terminal device.

In one implementation, one or more REs used for the first DMRS are the same as REs used for data. That is, one or more, or all, REs of the first DMRS are also REs used for data, where the data herein may be general data and/or control information. In the following description, for simplicity, these REs are referred to as shared REs.

By using shared REs for the DMRS and data, more REs can be used for data, thereby improving the transmission rate or enhancing transmission reliability. In embodiments of the disclosure, by employing the first indication information to indicate the power information of the first DMRS, the DMRS transmission power can be flexibly adjusted according to different situations, thereby better matching the current transmission environment and requirements and improving performance.

In one example, the terminal device sending and/or receiving data according to the first indication information includes the following. The first terminal device determines the power of the first DMRS based on the power information of the first DMRS. The first terminal device sends and/or receives data based on the power of the first DMRS.

The power information of the first DMRS may include a power offset value of the first DMRS, or a power parameter of the first DMRS, and other parameters. The power offset value of the first DMRS, or the power parameter of the first DMRS, and other parameters may be used to determine the power of the first DMRS. The aforementioned determination of power can be equivalently understood as calculating the power. For example, "used to determine the power of the first DMRS" is equivalent to "used to calculate the power of the first DMRS"; "used to determine the power of the second DMRS" is equivalent to "used to calculate the power of the first DMRS"; and so on.

In some examples, the first indication information is transmitted via downlink control information (DCI) signaling and/or medium access control control element (MAC CE) signaling. By transmitting the first indication information using DCI and/or MAC CE, the DMRS transmission power can be adjusted more dynamically according to different situations, thereby better matching the current transmission environment and requirements and improving performance.

In some implementations, the first indication information may include a first field, and the first field may indicate the first DMRS and/or power information of the first DMRS. Herein, when the value of the first field is a first value, the first field may indicate the first DMRS and/or power information of the first DMRS; when the value of the first field is a second value, the first field may indicate a second DMRS and/or power information of the second DMRS.

The REs used for the second DMRS cannot be used for data transmission, i.e., the REs used for the second DMRS are different from the REs used for data. The second DMRS may also be referred to as an orthogonal DMRS because the time-frequency resources of the second DMRS do not overlap with the time-frequency resources for data transmission and are orthogonal.

In one example, the value of the first field is only the first value, in which case the first field indicates the power information of the first DMRS.

In this manner, a single field can be used to indicate both the DMRS and the power parameter, and through joint encoding, signaling overhead can be reduced.

In the embodiments of the disclosure, the first value and the second value may be one or more, i.e., there may be one or more first values and one or more second values; the value of the first field may be one or one set of first values, or one or one set of second values.

In the embodiments of the disclosure, if the first indication information schedules data transmission (e.g., PUSCH data transmission, or PDSCH data transmission, or other data transmission), when the first field takes the first value, the data transmission employs the first DMRS; when the first field takes the second value, the data transmission employs the second DMRS.

In some implementations, the first indication information may further include a second field, where the second field indicates that the data transmission employs the first DMRS and/or the second DMRS. In this case, if the first indication information schedules data transmission (e.g., PUSCH data transmission, or PDSCH data transmission, or other data transmission), when the second field indicates that the data transmission employs the first DMRS, according to the indication of the second field, the data transmission employs the first DMRS; when the second field indicates that the data transmission employs the second DMRS, according to the indication of the second field, the data transmission employs the second DMRS; when the second field indicates that the data transmission employs the first DMRS and the second DMRS, according to the indication of the second field, the data transmission employs the first DMRS and the second DMRS.

For example, when the value of the second field is a third value, the second field indicates that the data transmission employs the first DMRS; when the value of the second field is a fourth value, the second field indicates that the data transmission employs the second DMRS; when the value of the second field is a fifth value, the second field indicates that the data transmission employs the first DMRS and the second DMRS. The second field indicating the simultaneous use of the first DMRS and the second DMRS can further improve channel estimation performance.

Herein, the REs used for the second DMRS cannot be used for data transmission, i.e., data and the second DMRS use different REs.

Further, in some examples, in a case where the second field indicates that the data transmission employs the first DMRS, the first field indicates power information of the first DMRS; in some examples, in a case where the second field indicates that the data transmission employs the second DMRS, the first field indicates power information of the second DMRS; in this manner, the scheme proposed in the embodiments of the disclosure can indicate the power information of the first DMRS and the power information of the second DMRS, which can better match the current transmission environment and improve system performance.

Alternatively, in a case where the second field indicates that the data transmission employs the second DMRS, the first field is ignored, or the first field indicates a predefined value; in this manner, the scheme proposed in the disclosure only indicates the power information of the first DMRS, which can reduce the complexity of product implementation.

In some examples, in a case where the second field indicates that the data transmission employs the first DMRS and the second DMRS, the first field indicates power information of the first DMRS; in this manner, the scheme proposed in the disclosure only indicates the power information of the first DMRS, which can reduce the complexity of product implementation.

In some examples, in a case where the second field indicates that the data transmission employs the first DMRS and the second DMRS, the first field indicates power information of the first DMRS and power information of the second DMRS. In this manner, the scheme proposed in the disclosure simultaneously indicates the power information of the first DMRS and the power information of the second DMRS, which can further optimize power according to the network environment and improve performance.

In the above examples, two fields are used for dynamic indication of the DMRS and the power parameter, respectively. The second field may indicate that the data transmission employs the first DMRS, or employs the second DMRS, or employs both the first DMRS and the second DMRS. Corresponding to the indication of the second filed, the first field may indicate the power information of the first DMRS, and/or indicate the power information of the second DMRS. Using two fields for dynamic indication of the DMRS and the power parameter respectively can improve flexibility while reducing the design complexity of the first indication information.

In some implementations, the power information indicated by the first indication information (power information of the first DMRS and/or power information of the second DMRS) may be one or one set of power offset values. For example, the power information of the first DMRS includes: one or one set of power offset values for the first DMRS; the power information of the second DMRS includes: one or one set of power offset values for the second DMRS. Indicating power information through power offset values enables power adjustment with a smaller granularity. Each first value of the aforementioned first field may correspond to one power offset value or a set of power offset values, and each second value of the aforementioned first field may correspond to one power offset value or a set of power offset values; there may be multiple options.

In some examples, the first network device may configure multiple power offset values or multiple sets of power offset values (e.g., configured via first configuration information); each first value of the first field corresponds to one power offset value or a set of power offset values according to a predetermined rule (e.g., protocol specification, network configuration, etc.), or each second value of the first field corresponds to one power offset value or a set of power offset values according to a predetermined rule (e.g., protocol specification, network configuration, etc.). Configuring the power offset values by the network device can improve system flexibility.

When configuring multiple or multiple sets of power offset values, independent configuration may be performed for the first DMRS and the second DMRS. For example, multiple or multiple sets of power offset values are configured for the first DMRS, and another multiple or multiple sets of power offset values are configured for the second DMRS. Accordingly, in a case where the data transmission employs the first DMRS, the power of the first DMRS is determined according to the multiple or multiple sets of power offset values configured for the first DMRS; in a case where the data transmission employs the second DMRS, the power of the second DMRS is determined according to the multiple or multiple sets of power offset values configured for the second DMRS.

For example, the first terminal device receives first configuration information, where the first configuration information configures multiple or multiple sets of power offset values.

In other examples, multiple power offset values or multiple sets of power offset values may be specified by a protocol, and the protocol specifies a power offset value or a set of power offset values corresponding to each first value of the first field, or the protocol specifies a power offset value or a set of power offset values corresponding to each second value of the first field. Specifying the power offset values by the protocol can simplify product implementation complexity.

When multiple or multiple sets of power offset values are specified by the protocol, they may be specified separately for the first DMRS and the second DMRS. For example, for the first DMRS, the protocol specifies multiple or multiple sets of power offset values; for the second DMRS, the protocol specifies another multiple or multiple sets of power offset values. Accordingly, in a case where the data transmission employs the first DMRS, the power of the first DMRS is determined according to the multiple or multiple sets of power offset values specified for the first DMRS; in a case where the data transmission employs the second DMRS, the power of the second DMRS is determined according to the multiple or multiple sets of power offset values specified for the second DMRS.

In some implementations, the first terminal device may determine the power of the first DMRS based on a first power and the one or one set of power offset values for the first DMRS; or, the first terminal device may determine the power of the second DMRS based on the first power and the one or one set of power offset values for the second DMRS.

In one example, the first terminal device receives second indication information, and the aforementioned first power is determined based on this second indication information. The second indication information may be sent to the first terminal device by the first network device or the second terminal device. The second indication information may be transmitted via radio resource control (RRC) signaling and/or MAC CE signaling.

The first terminal device determines the first power according to the second indication information, and increases or decreases power based on the first power according to the power offset value of the first DMRS, thereby obtaining the power of the first DMRS; or increases or decreases power based on the first power according to the power offset value of the second DMRS, thereby obtaining the power of the second DMRS.

In this manner, a basic power, i.e., the first power, is configured by the network, and then power is increased or decreased based on the basis power (the increased or decreased value being the power offset value) to obtain the DMRS power, which can reduce the overhead of dynamic indication signaling.

In some examples, the second indication information may indicate information for the first DMRS and the second DMRS respectively, so that the first terminal device can calculate a first power corresponding to the first DMRS and another first power corresponding to the second DMRS according to the second indication information. Similar extensions may be made in other places subsequently, and will not be repeated here.

Alternatively, in another example, the first power may include a power corresponding to the first DMRS during a previous data transmission. The first terminal device can determine the power of the first DMRS for a current data transmission based on the power corresponding to the first DMRS during the previous data transmission and the power offset value of the first DMRS. The first terminal device can determine the power of the second DMRS for the current data transmission based on the power corresponding to the second DMRS during the previous data transmission and the power offset value of the second DMRS.

In the above examples, the power offset value may have multiple values, including positive numbers, negative numbers, or zero. A power offset value of zero indicates no offset, i.e., the power of the first DMRS or the second DMRS is equal to the first power.

In some implementations, the power information indicated by the first indication information (power information of the first DMRS and/or power information of the second DMRS) may be one or one set of power parameters. For example, the power information of the first DMRS includes: one or one set of power parameters for the first DMRS; the power information of the second DMRS includes: one or one set of power parameters for the second DMRS.

The first terminal device may determine the power of the first DMRS based on the one or one set of power parameters for the first DMRS. The first terminal device may also determine the power of the second DMRS based on the one or one set of power parameters for the second DMRS. For example, the power parameters may include parameters involved in calculating power. The first terminal device can calculate one or one set of powers for the first DMRS by using the one or one set of power parameters for the first DMRS indicated by the first indication information. Alternatively, the first terminal device can calculate one or one set of powers for the second DMRS by using the one or one set of power parameters for the second DMRS indicated by the first indication information.

In some examples, the first network device may configure multiple power parameters or multiple sets of power parameters (e.g., configured via third indication information); the first terminal device receives the third indication information, where the third indication information configures the multiple or multiple sets of power parameters. In one example, the third indication information is transmitted via RRC signaling.

Each first value or each second value of the first field corresponds to one power parameter or one set of power parameters according to a predetermined rule (e.g., protocol specification, network configuration, etc.). Configuring multiple or multiple sets of power parameters via the network, and then dynamically indicating them via the first indication information, can improve system flexibility.

In some implementations, before the first terminal device receives the first indication information, the method may further include: the first terminal device sending first terminal capability, where the first terminal capability indicates that the first terminal device supports a first DMRS. The first terminal capability may be transmitted via RRC signaling and/or MAC CE.

In one example, the first terminal device may send the first terminal capability to a first network device or a second terminal device.

In one example, the first terminal capability is reported per band (i.e., corresponding capabilities can be reported independently for different bands). Reporting independently for different bands allows for greater freedom in implementation at the terminal. For example, a terminal may support this function on one or certain bands but not on other bands, thereby enabling more terminals to support this new function.

In one example, the first terminal capability is reported independently per band combination (i.e., corresponding capabilities can be reported independently for different band combinations). Reporting independently for different band combinations allows for greater freedom in implementation at the terminal. For example, a terminal may not support this function under one band combination but may support it under another band combination, thereby enabling more terminals to support this new function.

In one example, the first terminal capability is reported independently per band within a band combination (i.e., reporting independently for bands within different band combinations, i.e., per band per band combination). Reporting independently for each band within different band combinations allows for greater freedom in implementation at the terminal. For example, a terminal may not support this function under one band combination but may support it on certain bands under another band combination, thereby enabling more terminals to support this new function.

In one example, the first terminal capability is reported independently per carrier per band within a band combination (i.e., reporting independently for different component carriers (CC) within a band of different band combinations, i.e., per CC per band per band combination, or FSPC). Reporting independently for different band combinations, and also independently for different carriers on a band, allows for greater freedom in implementation at the terminal, thus enabling more terminals to support this new function.

In one example, the first terminal capability is reported per frequency range (FR) (i.e., reporting independently for different FRs, per FR, meaning reporting independently for FR1 and FR2). Reporting independently for different FRs allows for greater freedom in implementation at the terminal. For example, a terminal device may not support this function in a low frequency range (e.g., FR1) but may support it in a high frequency range (e.g., FR2), thereby enabling more terminals to support this new function.

In one example, the first terminal capability is reported per UE (i.e., per UE, meaning if the UE reports the first terminal capability, it can support this function across all bands). This approach can reduce the signaling overhead for terminal capability reporting.

In some implementations, before the first terminal device receives the first indication information, the method may further include: the first terminal device sending second terminal capability, where the second terminal capability indicates that the first terminal device supports indicating power information of the first DMRS via the first indication information. For example, the second terminal capability indicates that the first terminal device supports dynamic indication of power information via DCI and/or MAC CE.

The second terminal capability may be transmitted via RRC signaling and/or MAC CE.

In one example, the first terminal device may send the second terminal capability to a first network device or a second terminal device.

In one example, the second terminal capability is reported per band (i.e., corresponding capabilities can be reported independently for different bands). Reporting independently for different bands allows for greater freedom in implementation at the terminal. For example, a terminal may support this function on one or certain bands but not on other bands, thereby enabling more terminals to support this new function.

In one example, the second terminal capability is reported independently per band combination (i.e., corresponding capabilities can be reported independently for different band combinations). Reporting independently for different band combinations allows for greater freedom in implementation at the terminal. For example, a terminal may not support this function under one band combination but may support it under another band combination, thereby enabling more terminals to support this new function.

In one example, the second terminal capability is reported independently per band within a band combination (i.e., reporting independently for bands within different band combinations, i.e., per band per band combination). Reporting independently for each band within different band combinations allows for greater freedom in implementation at the terminal. For example, a terminal may not support this function under one band combination but may support it on certain bands under another band combination, thereby enabling more terminals to support this new function.

In one example, the second terminal capability is reported independently per carrier per band within a band combination (i.e., reporting independently for different component carriers (CC) within a band of different band combinations, i.e., per CC per band per band combination, or FSPC). Reporting independently for different band combinations, and also independently for different carriers on a band, allows for greater freedom in implementation at the terminal, thus enabling more terminals to support this new function.

In one example, the second terminal capability is reported per frequency range (FR) (i.e., reporting independently for different FRs, per FR, meaning reporting independently for FR1 and FR2). Reporting independently for different FRs allows for greater freedom in implementation at the terminal. For example, a terminal device may not support this function in a low frequency range (e.g., FR1) but may support it in a high frequency range (e.g., FR2), thereby enabling more terminals to support this new function.

In one example, the second terminal capability is reported per UE (i.e., per UE, meaning if the UE reports the first terminal capability, it can support this function across all bands). This approach can reduce the signaling overhead for terminal capability reporting.

In some implementations, before the first terminal device receives the first indication information, the method may further include the following. The first terminal device sends third terminal capability, where the third terminal capability indicates that the first terminal device supports indicating power information of the first DMRS and/or the second DMRS via the first indication information, or the third terminal capability indicates that the first terminal device supports indicating the first DMRS and/or the second DMRS via the first indication information. For example, the third terminal capability indicates that the first terminal device supports DCI and/or MAC CE indicating one of multiple DMRSs.

The third terminal capability may be transmitted via RRC signaling and/or MAC CE.

In one example, the first terminal device may send the third terminal capability to a first network device or a second terminal device.

In one example, the first terminal device may send the third terminal capability to a first network device or a second terminal device.

In one example, the third terminal capability is reported per band (i.e., corresponding capabilities can be reported independently for different bands). Reporting independently for different bands allows for greater freedom in implementation at the terminal. For example, a terminal may support this function on one or certain bands but not on other bands, thereby enabling more terminals to support this new function.

In one example, the third terminal capability is reported independently per band combination (i.e., corresponding capabilities can be reported independently for different band combinations). Reporting independently for different band combinations allows for greater freedom in implementation at the terminal. For example, a terminal may not support this function under one band combination but may support it under another band combination, thereby enabling more terminals to support this new function.

In one example, the third terminal capability is reported independently per band within a band combination (i.e., reporting independently for bands within different band combinations, i.e., per band per band combination). Reporting independently for each band within different band combinations allows for greater freedom in implementation at the terminal. For example, a terminal may not support this function under one band combination but may support it on certain bands under another band combination, thereby enabling more terminals to support this new function.

In one example, the third terminal capability is reported independently per carrier per band within a band combination (i.e., reporting independently for different component carriers (CC) within a band of different band combinations, i.e., per CC per band per band combination, or FSPC). Reporting independently for different band combinations, and also independently for different carriers on a band, allows for greater freedom in implementation at the terminal, thus enabling more terminals to support this new function.

In one example, the third terminal capability is reported per frequency range (FR) (i.e., reporting independently for different FRs, per FR, meaning reporting independently for FR1 and FR2). Reporting independently for different FRs allows for greater freedom in implementation at the terminal. For example, a terminal device may not support this function in a low frequency range (e.g., FR1) but may support it in a high frequency range (e.g., FR2), thereby enabling more terminals to support this new function.

In one example, the third terminal capability is reported per UE (i.e., per UE, meaning if the UE reports the first terminal capability, it can support this function across all bands). This approach can reduce the signaling overhead for terminal capability reporting.

An embodiment of the disclosure also provides a power indication method, which can be applied to a first network device or a second terminal device. FIG. 3 is a schematic flowchart of a power indication method 300 according to an embodiment of the disclosure. The method may optionally be applied to the system shown in FIG. 1, but is not limited thereto. The method includes at least part of the following content.

S310: A first network device or a second terminal device sends first indication information, where the first indication information indicates a first DMRS and/or power information of the first DMRS.

In some implementations, one or more REs used for the first DMRS are the same as REs used for data.

In some implementations, the first indication information includes a first field, where the first field indicates the first DMRS and/or the power information of the first DMRS.

In some implementations, when a value of the first field is a first value, the first field indicates the first DMRS and/or the power information of the first DMRS.

In some implementations, when the value of the first field is a second value, the first field indicates a second DMRS and/or power information of the second DMRS.

In one example, the value of the first field is only the first value, in which case the first field indicates the power information of the first DMRS.

In some implementations, when the value of the first field is the first value, a corresponding data transmission employs the first DMRS; when the value of the first field is the second value, a corresponding data transmission employs the second DMRS.

In some implementations, the first indication information further includes a second field, where the second field indicates that data transmission employs the first DMRS and/or the second DMRS.

In some implementations, in a case where the second field indicates that the data transmission employs the first DMRS, the first field indicates power information of the first DMRS.

In some implementations, in a case where the second field indicates that the data transmission employs the second DMRS, the first field indicates power information of the second DMRS.

In some implementations, in a case where the second field indicates that the data transmission employs the second DMRS, the first field is ignored, or the first field indicates a predefined value.

In some implementations, in a case where the second field indicates that the data transmission employs the first DMRS and the second DMRS, the first field indicates power information of the first DMRS.

In some implementations, in a case where the second field indicates that the data transmission employs the first DMRS and the second DMRS, the first field indicates power information of the first DMRS and power information of the second DMRS.

In some implementations, REs used for the second DMRS are different from REs used for data.

In some implementations, the method further includes: the first network device or the second terminal device sending and/or receiving data according to the first DMRS and/or the power information of the first DMRS.

In some implementations, the first network device or the second terminal device sending and/or receiving data according to the first DMRS and/or the power information of the first DMRS includes: the first network device or the second terminal device determining the power of the first DMRS based on the power information of the first DMRS; the first network device or the second terminal device sending and/or receiving data based on the power of the first DMRS.

In some implementations, the power information of the first DMRS includes: one or one set of power offset values for the first DMRS.

In some implementations, the first network device or the second terminal device determining the power of the first DMRS based on the power information of the first DMRS includes: the first network device or the second terminal device determining the power of the first DMRS based on a first power and the one or one set of power offset values for the first DMRS.

In some implementations, the method further includes: the first network device or the second terminal device sending first configuration information, where the first configuration information configures multiple or multiple sets of power offset values; the one or one set of power offset values for the first DMRS is one or one set of power offset values from among the multiple or multiple sets of power offset values.

In some implementations, the method further includes: the first network device or the second terminal device sending second indication information, where the second indication information indicates the first power.

In some implementations, the second indication information is transmitted via RRC signaling and/or MAC CE signaling.

In some implementations, the first power includes a power corresponding to the first DMRS during a previous data transmission.

In some implementations, the power information of the first DMRS includes: one or one set of power parameters for the first DMRS.

In some implementations, the first network device or the second terminal device determining the power of the first DMRS based on the power information of the first DMRS includes: the first network device or the second terminal device determining the power of the first DMRS based on the one or one set of power parameters for the first DMRS.

In some implementations, the method further includes: the first network device or the second terminal device sending third indication information, where the third indication information configures multiple or multiple sets of power parameters; the one or one set of power parameters for the first DMRS is one or one set of power parameters from among the multiple or multiple sets of power parameters.

In some implementations, the third indication information is transmitted via RRC signaling and/or MAC CE signaling.

In some implementations, the first indication information is transmitted via DCI signaling and/or MAC CE signaling.

In some implementations, before the first network device or the second terminal device sends the first indication information, the method further includes: the first network device or the second terminal device receiving first terminal capability sent by a first terminal device, where the first terminal capability indicates that the first terminal device supports the first DMRS.

In some implementations, the first terminal capability is transmitted via RRC signaling and/or MAC CE.

In some implementations, before the first network device or the second terminal device sends the first indication information, the method further includes: the first network device or the second terminal device receiving second terminal capability sent by the first terminal device, where the second terminal capability indicates that the first terminal device supports indicating power information of the first DMRS via the first indication information.

In some implementations, the second terminal capability is transmitted via RRC signaling and/or MAC CE.

In some implementations, before the first network device or the second terminal device sends the first indication information, the method further includes: the first network device or the second terminal device receiving third terminal capability sent by the first terminal device, where the third terminal capability indicates that the first terminal device supports indicating power information of the first DMRS and/or power information of the second DMRS via the first indication information, or the third terminal capability indicates that the first terminal device supports indicating the first DMRS and/or the second DMRS via the first indication information.

In some implementations, the third terminal capability is transmitted via RRC signaling and/or MAC CE.

Specific examples of the method 300 performed by first network device or the second terminal device in this embodiment can be found in the relevant descriptions of the first network device or the second terminal device in the aforementioned method 200, and are not repeated here for brevity.

Detailed descriptions will be provided below with reference to the accompanying drawings and specific embodiments.

In the embodiments of the disclosure, "data" may refer to general data to be transmitted, or may refer to control information.

### Embodiment 1:

This embodiment introduces the first DMRS and the second DMRS.

### I. First demodulation reference signal (denoted as first DMRS)

One or more, or all, REs of the first DMRS are also REs used for data (including general data or control information). (For simplicity of description, these REs may be referred to as shared REs). The first DMRS may also be referred to as a non-orthogonal DMRS, because one or some REs for the first DMRS are also used for data transmission, thus the time-frequency resources of the first DMRS overlap with the time-frequency resources for data transmission and are non-orthogonal. The first DMRS and data use the same REs, thereby allowing data to use more REs, which can improve the transmission rate or enhance transmission reliability.

Taking PDSCH transmission as an example, assume the network schedules 8 symbols (other numbers are possible, e.g., 1, 2, 3, 4, 5, 6, 7, 9, 10, 11, 12, 13, 14, etc.) for data transmission, and the frequency domain range is 12 subcarriers (other numbers are possible, e.g., 4, 8, 16, etc.), i.e., a total of 12*8=96 REs. As shown in the time-frequency range in Table 1, each cell in Table 1 represents one RE. In Table 1, all REs are used for both data and first DMRS transmission.

**Table 1**

| | | | | | | | | |
|---|---|---|---|---|---|---|---|---|
| 11 | | | | | | | | |
| 10 | | | | | | | | |
| 9 | | | | | | | | |
| 8 | | | | | | | | |
| 7 | | | | | | | | |
| 6 | | | | | | | | |
| 5 | | | | | | | | |
| 4 | | | | | | | | |
| 3 | | | | | | | | |
| 2 | | | | | | | | |
| 1 | | | | | | | | |
| 0 | | | | | | | | |
| | 0 | 1 | 2 | 3 | 4 | 5 | 6 | 7 |

Another example is shown in Table 2, where each cell in Table 2 represents one RE. In Table 2, REs represented by cells with a pattern fill are used for both data transmission and first DMRS transmission. REs represented by cells without a pattern fill are used only for data transmission. In another example, the 12 REs corresponding to the first symbol (i.e., symbol 0) in the PDSCH time-frequency resource are used for both data transmission and first DMRS transmission, while REs corresponding to other symbols (i.e., symbols 1 to 7) are used only for data transmission.

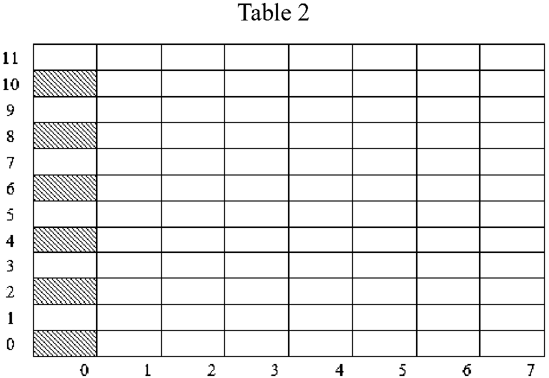

It should be noted that in a code division multiple access (CDMA) system, although pilot signals (including DMRS) and data signals (including data signals related to control information) can be transmitted on the same time-frequency resources, both the pilot signals and the data signals require additional spreading processing. For example, the pilot signals and the data signals need to use different orthogonal codes for distinction. In other words, in CDMA in the related art, the pilot signals and data signals transmitted on the same time-frequency resources are the spread-processed pilot signals and data signals. In contrast, the embodiments of the disclosure are mainly applied to OFDM systems/SC-FDMA systems, and other systems based on multiple sub-carriers. Modulation symbols of data signals (e.g., QPSK, 16QAM) and modulation symbols of demodulation pilot signals can be directly transmitted on the same time-frequency resources, without requiring additional spreading processing for the pilot signals and data signals. That is, in the solutions provided in the subsequent embodiments of the disclosure, the pilot signals and data signals transmitted on the same time-frequency resources may be pilot signals and data signals that have not undergone spreading processing.

### II. Second DMRS

REs used for the second DMRS cannot be used for data. That is, data and the second DMRS use different REs, or in other words, the second DMRS and data use different time-frequency resources (i.e., the time-frequency resources used by the second DMRS are orthogonal to the time-frequency resources used for data). Table 3 is an example of the second DMRS. Each cell in Table 3 represents one RE. In Table 3, REs represented by cells with a pattern fill are used for second DMRS transmission; REs represented by cells without a pattern fill are used for data transmission.

The second DMRS may also be referred to as an orthogonal DMRS, because the time-frequency resources of the second DMRS do not overlap with the time-frequency resources for data transmission and are orthogonal.

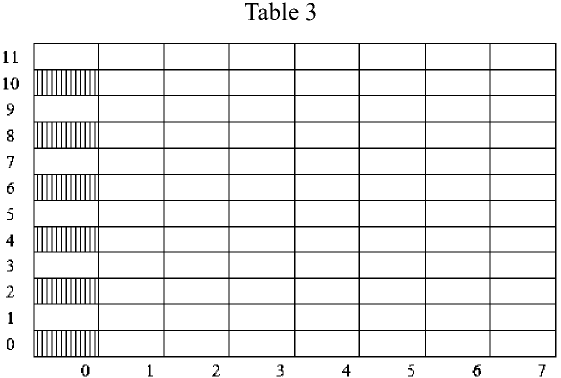

The first DMRS and the second DMRS introduced in this embodiment are applicable in subsequent embodiments as well.

### Embodiment 2:

In this embodiment, the first indication information includes a first field and a second field.

A first terminal device receives first indication information sent by a first network device or a second terminal device (corresponding to a sidelink scenario). The first indication information indicates power information of a first demodulation reference signal (denoted as first DMRS). One or more, or all, REs of the first DMRS are also REs used for data (including general data or control information). These REs may be referred to as shared REs.

The power information may include one or more of: a power offset value, a power parameter, a power parameter offset value, parameters related to path loss calculation, and other parameters.

The first indication information may be transmitted via DCI signaling and/or MAC CE signaling.

The first indication information includes two fields, denoted as a first field and a second field, respectively.

When a value of the second field is a third value, the second field indicates that data transmission employs the first DMRS.

In this case, if the first indication information schedules a first data transmission (e.g., PUSCH, or PDSCH, or other transmission), the first data transmission employs the first DMRS, and the first field indicates power information of the first DMRS.

When the value of the second field is a fourth value, the second field indicates that data transmission employs the second DMRS.

In this case, if the first indication information schedules the first data transmission (e.g., PUSCH, or PDSCH, or other transmission), the first data transmission employs the second DMRS, and the first field may indicate power information of the second DMRS, or the information in the first field may be ignored.

The second field may also have a fifth value. When the value of the second field is the fifth value, the second field indicates that data transmission employs the first DMRS and the second DMRS.

In this case, if the first indication information schedules a first data transmission (e.g., PUSCH, or PDSCH, or other transmissions), the first data transmission may employ a first DMRS, or the first data transmission may employ both the first DMRS and a second DMRS. Furthermore, the first field indicates power information of the first DMRS.

In this embodiment, the first field may indicate power information of the first DMRS. Alternatively, the first field may indicate power information of either the first DMRS or the second DMRS.

In some implementations, the power information may include a power offset value. Assume the first field has X possible values (i.e., corresponding to X different first values), respectively denoted as a first codepoint, a second codepoint, ..., an X-th codepoint. Each codepoint may indicate one power offset value or one set of power offset values. The power offset value may be expressed in dB or as a linear value. During signaling indication or in use, conversion may be required (e.g., converting from a dB value to a linear value, or from a linear value to a dB value), which will not be elaborated upon in each example of the present invention.

In one implementation example, a first network device or a second terminal device configures, via first configuration information, multiple power offset values or multiple sets of power offset values for a first terminal device. For instance, the network may configure X power offset values/X sets of power offset values, where one codepoint corresponds to one power offset value/one set of power offset values. As another example, the network may configure X-1 power offset values/X-1 sets of power offset values, where one codepoint corresponds to a power offset value of 0 (i.e., no power offset), and each of the other X-1 codepoints respectively corresponds to one power offset value/one set of power offset values. For example, the network may configure K1 power offset values/K1 sets of power offset values (K1 < X-1), where one codepoint corresponds to a power offset value of 0 (i.e., no power offset), each of the other K1 codepoints corresponds to one power offset value/one set of power offset values, and the remaining X-K1-1 codepoints may be reserved and not used; alternatively, the remaining X-K1-1 codepoints may correspond to a fixed power offset value (e.g., 0) according to protocol specifications; or, the remaining X-K1-1 codepoints may correspond to one specific value or one specific set among the K1 power offset values/K1 sets of power offset values according to protocol specifications. In another example, the network may configure K1 power offset values/K1 sets of power offset values (K1 < X-1), where each of the K1 codepoints corresponds to one power offset value/one set of power offset values, and the remaining X-K1 codepoints may be reserved and not used; alternatively, the remaining X-K1 codepoints may correspond to a fixed power offset value (e.g., 0) according to protocol specifications; or, the remaining X-K1 codepoints may correspond to one specific value or one specific set among the K1 power offset values/K1 sets of power offset values according to protocol specifications. The correspondence between codepoints and power offset values can be implemented in various methods, for example, which codepoint corresponds to which power offset value/which set of power offset values can be determined according to predetermined rules (such as protocol specification, network configuration, etc.).

In another implementation example, the protocol specifies the power offset value corresponding to each first value (i.e., each codepoint). The power offset value corresponding to one or more codepoints may be 0 (i.e., no power offset).

When configuring multiple power offset values or multiple sets of power offset values, the configuration may be performed independently for the first DMRS and the second DMRS. For example, multiple power offset values or multiple sets of power offset values are configured for the first DMRS, and another multiple power offset values or multiple sets of power offset values are configured for the second DMRS. Accordingly, in a case where the data transmission employs the first DMRS, the power of the first DMRS is determined using the multiple power offset values or the multiple sets of power offset values configured for the first DMRS; in a case where the data transmission employs the second DMRS, the power of the second DMRS is determined using the multiple power offset values or the multiple sets of power offset values configured for the second DMRS.

In the above examples, the power offset value may refer to an increase or decrease in power relative to a certain first power (e.g., if the first power is P and the power offset value is D, then the power of the first DMRS or the second DMRS is calculated as P+D; where D can be a positive number, a negative number, or 0). The actual power may be obtained by further processing based on P+D, for example, it must not exceed the allowed maximum transmission power.

Herein, the first terminal device may determine the first power (i.e., corresponding to P described above) based on second indication information, and the power offset value (D) is the increase or decrease in power relative to this first power. The second indication information may be sent to the first terminal device by the first network device or the second terminal device. The second indication information may be transmitted via RRC signaling and/or MAC CE signaling.

When the first power is configured by the second indication information, the configuration may also be performed independently for the first DMRS and the second DMRS. For example, one first power is configured for the first DMRS, and another first power is configured for the second DMRS. Accordingly, in a case where the data transmission employs the first DMRS, the power of the first DMRS is determined according to the first power configured for the first DMRS; in a case where the data transmission employs the second DMRS, the power of the second DMRS is determined according to the second power configured for the second DMRS.

Alternatively, the first power may be the power used in a previous data transmission. For example, for PDSCH data transmission, the first power may be the power corresponding to the DMRS in a previous PDSCH; for PUSCH data transmission, the first power may be the power corresponding to the DMRS in a previous PUSCH. The "previous data transmission" mentioned herein may also include the case where a previous data transmission using the same DMRS. For instance, if considering the power of the first DMRS, the "previous data transmission" may refer to the "previous data transmission employing the first DMRS". Other cases are similar and will not be elaborated upon.

In some implementations, the power information may include a power parameter or a power parameter offset value. The first field may indicate the power parameter/power parameter offset value for the first DMRS or the power parameter/power parameter offset value for the second DMRS. The power parameter may be used for calculating power. Assume the first field has X possible values (i.e., corresponding to X different first values), respectively denoted as a first codepoint, a second codepoint, ..., an X-th codepoint. Each codepoint may indicate one power parameter/power parameter offset value, or indicate a set of power parameters/power parameter offset values.

In one implementation example, a first network device or a second terminal device configures, via first configuration information, multiple power parameters/power parameter offset values, or configures multiple sets of power parameters/power parameter offset values for a first terminal device. For instance, the network may configure X power parameter offset values/X sets of power parameter offset values, where one codepoint corresponds to one power parameter offset value/one set of power parameter offset values. For example, the network may configure X-1 power parameter offset values, where one codepoint corresponds to a power parameter offset value of 0 (i.e., no power parameter offset), and each of the other X-1 codepoints respectively corresponds to one power parameter offset value/one set of power parameter offset values. For example, the network may configure K1 power parameter offset values/K1 sets of power parameter offset values (K1 < X-1), where one codepoint corresponds to a power parameter offset value of 0 (i.e., no power parameter offset), each of the other K1 codepoints corresponds to one power parameter offset value/one set of power parameter offset values, and the remaining X-K1-1 codepoints may be reserved and not used; alternatively, the remaining X-K1-1 codepoints may correspond to a fixed power parameter offset value (e.g., 0) according to protocol specifications; or, the remaining X-K1-1 codepoints may correspond to one specific value or one specific set among the K1 power parameter offset values/K1 sets of power parameter offset values according to protocol specifications. In another example, the network may configure K1 power parameter offset values/K1 sets of power parameter offset values (K1 < X-1), where each of the K1 codepoints corresponds to one power parameter offset value/one set of power parameter offset values, and the remaining X-K1 codepoints may be reserved and not used; alternatively, the remaining X-K1 codepoints may correspond to a fixed power parameter offset value (e.g., 0) according to protocol specifications; or, the remaining X-K1 codepoints may correspond to one specific value or one specific set among the K1 power parameter offset values/K1 sets of power parameter offset values according to protocol specifications.

The correspondence between codepoints and power parameters/power parameter offset values can be implemented in different methods, for example, which codepoint corresponds to which power parameter/power parameter offset value or which set of power parameters/power parameter offset values can be determined according to predetermined rules (such as protocol specification, network configuration, etc.). When the protocol specifies or the network configures the power parameters/power parameter offset values, the specification or configuration may be performed independently for the first DMRS and the second DMRS. For example, power parameters/power parameter offset values are specified or configured for the first DMRS, and power parameters/power parameter offset values are specified or configured for the second DMRS. Accordingly, in a case where the data transmission employs the first DMRS, the power of the first DMRS is determined according to the power parameters/power parameter offset values specified or configured for the first DMRS; in a case where the data transmission employs the second DMRS, the power of the second DMRS is determined according to the power parameters/power parameter offset values specified or configured for the second DMRS.

In another implementation example, the protocol specifies the power parameter/power parameter offset value corresponding to each first value (i.e., each codepoint). The power parameter offset value corresponding to one or more codepoints may be 0 (i.e., no power parameter offset).

In the above examples, the power parameter offset value may refer to an increase or decrease relative to a certain power parameter, e.g., if a certain power parameter is A and the power parameter offset value is D (D can be a positive number, a negative number, or 0), then the offset power parameter is A + D. The power corresponding to the DMRS is calculated using A + D. The actual power may be obtained by further processing based on the calculated power, for example, it must not exceed the allowed maximum transmission power.

Herein, the first terminal device may determine the power parameter (i.e., corresponding to A described above) based on second indication information, increase or decrease the power parameter by the power parameter offset (D), and then calculate the power corresponding to the DMRS according to the offset power parameter (i.e., A + D). The second indication information may be transmitted via RRC signaling and/or MAC CE signaling.

One implementation example is: the first terminal device receives third indication information sent by the first network device or the second terminal device, where the third indication information indicates multiple first power parameters. The first field may have one or more first values (i.e., one codepoint or multiple codepoints), and each first value respectively indicates one first power parameter among the multiple first power parameters. For example, if the third indication information indicates K2 first power parameters, then K2 codepoints respectively correspond to one first power parameter among the K2 first power parameters. The remaining X-K2 (or X-K2-1, where said "1" codepoint may correspond to a fixed value, e.g., 0) codepoints may be reserved and not used; alternatively, the remaining X-K2 codepoints correspond to a fixed power parameter (e.g., the fixed power parameter may be a fixed power offset value, and the fixed power offset value is 0) according to protocol specifications; or, the remaining X-K2 (or X-K2-1, where another one may correspond to a fixed value, e.g., 0) codepoints correspond to one specific value among the K2 first power parameters according to protocol specifications.

Another implementation example is: the first terminal device receives third indication information sent by the first network device or the second terminal device, where the third indication information indicates multiple sets of first power parameters. The first field may have one or more first values (i.e., one codepoint or multiple codepoints), and each first value respectively indicates one set of first power parameters among the multiple sets of first power parameters. For example, if the third indication information indicates K3 sets of first power parameters, then K3 codepoints respectively correspond to one set of first power parameters among the K3 sets of first power parameters. The remaining X-K3 (or X-K3-1, where another one may correspond to a fixed set of parameters) codepoints may be reserved and not used; alternatively, the remaining X-K3 codepoints correspond to a fixed set of power parameters according to protocol specifications; or, the remaining X-K3 (or X-K3-1, where said "1" codepoint may correspond to a fixed set of parameters) codepoints correspond to one specific set among the K3 sets of first power parameters according to protocol specifications.

Through the above process, the first terminal device can determine the power of the first DMRS or the second DMRS, and transmit and/or receive signals according to this power.

Furthermore, before receiving the first indication information, the first terminal device may also report its own capabilities to the first network device or the second terminal device. For example, the first terminal device sends at least one of a first terminal capability, a second terminal capability, and a third terminal capability. The specific sending method can refer to the foregoing description and will not be elaborated upon here.

### Embodiment 3

In this embodiment, the first indication information includes a first field. The first field can indicate power information of a first DMRS, and can also indicate a second DMRS and/or power information of a second DMRS.

A first terminal device receives first indication information sent by a first network device or a second terminal device (corresponding to a sidelink scenario). The first indication information indicates power information of a first demodulation reference signal (denoted as a first DMRS). One or more, or all, resource elements (REs) of the first DMRS are also REs used for data (including general data or control information). These REs may be referred to as shared REs.

Herein, the power information may include one or more of: a power offset value, a power parameter, a power parameter offset value, a parameter related to path loss calculation, and other parameters.

The first indication information may be transmitted via DCI signaling and/or MAC CE signaling.

The first indication information contains one field, i.e., the first field.

The values of the first field include at least two types, namely, K4 different first values and K5 different second values (K5 may be equal to 1, or K5 may be greater than 1). Assume that the first field has at least K4+K5 values, i.e., K4+K5 codepoints, where the K4 codepoints correspond to the K4 first values, and the K5 codepoints correspond to the K5 second values.

The first field may have X possible values (i.e., X different codepoints). If X > K4+K5, then the remaining X-K4-K5 codepoints (i.e., codepoints excluding the K4 codepoints corresponding to the first values and the K5 codepoints corresponding to the second values) may be reserved and not used.

When the first field indicates a second value, the first field indicates a second DMRS and/or power information of a second DMRS. If the first indication information schedules a first data transmission (e.g., PUSCH, or PDSCH, or other transmissions), the first data transmission employs the second DMRS.

When the first field indicates a first value, the first field indicates power information of the first DMRS.

In some implementations, the power information may include a power offset value. In one example, each codepoint among the K4 codepoints (i.e., each of the K4 first values) indicates one power offset value. The power offset value may be expressed in dB or as a linear value. During signaling indication or in use, conversion may be required (e.g., converting from a dB value to a linear value, or from a linear value to a dB value), which will not be elaborated upon in each example of the present invention.

In one implementation example, a first network device or a second terminal device configures, via first configuration information, multiple power offset values or multiple sets of power offset values for a first terminal device. For example, the network may configure K4 power offset values/K4 sets of power offset values, where each of the K4 codepoints corresponds to one power offset value/one set of power offset values. For example, the network may configure K4-1 power offset values, where one codepoint corresponds to a power offset value of 0 (i.e., no power offset), and each of the other K4-1 codepoints respectively corresponds to one power offset value/one set of power offset values. The correspondence between codepoints and power offset values can be implemented in different methods, for example, which codepoint corresponds to which power offset value can be determined according to predetermined rules (such as protocol specification, network configuration, etc.).

In the above examples, the power offset value may refer to an increase or decrease in power relative to a certain first power (e.g., if the first power is P and the power offset value is D, then the power of the first DMRS or the second DMRS is calculated as P+D; where D can be a positive number, a negative number, or 0). For example, the protocol specifies the power offset value corresponding to each first value (i.e., each codepoint among the K4 codepoints), where the power offset value corresponding to one or more codepoints may be 0 (i.e., no power offset).

Herein, the first terminal device may determine the first power (i.e., corresponding to P described above) according to second indication information, and the power offset value (D) is the increase or decrease in power relative to this first power. The second indication information may be sent to the first terminal device by the first network device or the second terminal device. The second indication information may be transmitted via RRC signaling and/or MAC CE signaling.

Alternatively, the first power may be the power used in a previous data transmission. For example, for PDSCH data transmission, the first power may be the power corresponding to the DMRS in a previous PDSCH; for PUSCH data transmission, the first power may be the power corresponding to the DMRS in a previous PUSCH.

In some implementations, the power information may include a power parameter or a power parameter offset value. The first field may indicate the power parameter/power parameter offset value for the first DMRS or the power parameter/power parameter offset value for the second DMRS. The correspondence between codepoints and power parameters/power parameter offset values can be implemented in various methods, for example, which codepoint corresponds to which power parameter/power parameter offset value or which set of power parameters/power parameter offset values can be determined according to predetermined rules (such as protocol specification, network configuration, etc.).

In the above examples, the power parameter offset value may refer to an increase or decrease relative to a certain power parameter e.g., if a certain power parameter is A and the power parameter offset value is D (D can be a positive number, a negative number, or 0), then the offset power parameter is A + D. The power corresponding to the DMRS is calculated based on A + D.

Herein, the first terminal device may determine the power parameter (i.e., corresponding to A described above) based on second indication information, increase or decrease the power parameter by the power parameter offset (D), and then calculate the power corresponding to the DMRS based on the offset power parameter (i.e., A + D).

One implementation example is: the first terminal device receives third indication information sent by the first network device or the second terminal device, where the third indication information indicates multiple first power parameters. One or more first values among the values of the first field (i.e., one or more codepoints among the K4 codepoints) each respectively indicate one first power parameter among the multiple first power parameters. For example, if the third indication information indicates K4 first power parameters, then the K4 codepoints respectively correspond to one first power parameter among the K4 first power parameters.

Another implementation example is: the first terminal device receives third indication information sent by the first network device or the second terminal device, where the third indication information indicates multiple sets of first power parameters. One or more first values among the values of the first field (i.e., one or more codepoints among the K4 codepoints) each respectively indicate one set of first power parameters among the multiple sets of first power parameters. For example, if the third indication information indicates K3 sets of first power parameters, then K3 codepoints respectively correspond to one set of first power parameters among the K3 sets of first power parameters.

Through the above process, the first terminal device can determine the power of the first DMRS or the second DMRS, and transmit and/or receive signals according to this power.

Furthermore, before receiving the first indication information, the first terminal device may also report its own capabilities to the first network device or the second terminal device. For example, the first terminal device sends at least one of a first terminal capability, a second terminal capability, and a third terminal capability. The specific sending method can refer to the foregoing description and will not be elaborated upon here.

### Embodiment 4

In this embodiment, the first indication information includes a first field. The first field indicates only power information of a first DMRS, and does not indicate power information of a second DMRS.

A first terminal device receives first indication information sent by a first network device or a second terminal device (corresponding to a sidelink scenario). The first indication information indicates power information of a first demodulation reference signal (denoted as a first DMRS). One or more, or all, resource elements (REs) of the first DMRS are also REs used for data (including general data or control information). These REs may be referred to as shared REs.

Herein, the power information may include one or more of: a power offset value, a power parameter, a power parameter offset value, a parameter related to path loss calculation, and other parameters.

The first indication information may be transmitted via DCI signaling and/or MAC CE signaling.

The first indication information contains one field, i.e., the first field. The first field may indicate power information of the first DMRS.

In some implementations, the power information may include a power offset value, and the first field may indicate a power offset value for the first DMRS. Assume the first field has X possible values (i.e., corresponding to X different first values), respectively denoted as a first codepoint, a second codepoint, ..., an X-th codepoint. Each codepoint may indicate one power offset value or a set of power offset values. The power offset value may be expressed in dB or as a linear value. During signaling indication or in use, conversion may be required (e.g., converting from a dB value to a linear value, or from a linear value to a dB value), which will not be elaborated upon in each example of the present invention.

In one implementation example, a first network device or a second terminal device configures, via first configuration information, multiple power offset values or multiple sets of power offset values for a first terminal device. For instance, the network may configure X power offset values/X sets of power offset values, where one codepoint corresponds to one power offset value/one set of power offset values. As another example, the network may configure X-1 power offset values/X-1 sets of power offset values, where one codepoint corresponds to a power offset value of 0 (i.e., no power offset), and each of the other X-1 codepoints respectively corresponds to one power offset value/one set of power offset values. For example, the network may configure K6 power offset values/K6 sets of power offset values (K6 < X-1), where one codepoint corresponds to a power offset value of 0 (i.e., no power offset), each of the other K6-1 codepoints corresponds to one power offset value/one set of power offset values, and the remaining X-K6 codepoints may be reserved and not used; alternatively, the remaining X-K6 codepoints may correspond to a fixed power offset value (e.g., 0) according to protocol specifications; or, the remaining X-K6 codepoints may correspond to one specific value or one specific set among the K6 power offset values/K6 sets of power offset values according to protocol specifications. The correspondence between codepoints and power offset values can be implemented in various methods, for example, which codepoint corresponds to which power offset value/which set of power offset values can be determined according to predetermined rules (such as protocol specification, network configuration, etc.).

In another implementation example, the protocol specifies the power offset value corresponding to each first value (i.e., each codepoint). The power offset value corresponding to one or more codepoints may be 0 (i.e., no power offset).

In the above examples, the power offset value may refer to an increase or decrease in power relative to a certain first power (e.g., if the first power is P and the power offset value is D, then the power of the first DMRS is calculated as P+D; where D can be a positive number, a negative number, or 0).

Herein, the first terminal device may determine the first power (i.e., corresponding to P described above) based on second indication information, and the power offset value (D) is the increase or decrease in power relative to this first power. The second indication information may be sent to the first terminal device by the first network device or the second terminal device. The second indication information may be transmitted via RRC signaling and/or MAC CE signaling.

Alternatively, the first power may be the power used in a previous data transmission. For example, for PDSCH data transmission, the first power may be the power corresponding to the DMRS in a previous PDSCH; for PUSCH data transmission, the first power may be the power corresponding to the DMRS in a previous PUSCH.

In some implementations, the power information may include a power parameter or a power parameter offset value. The first field may indicate the power parameter/power parameter offset value for the first DMRS. The power parameter may be used for calculating power. Assume the first field has X possible values (i.e., corresponding to X different first values), respectively denoted as a first codepoint, a second codepoint, ..., an X-th codepoint. Each codepoint may indicate one power parameter/power parameter offset value, or indicate a set of power parameters/power parameter offset values.

In one implementation example, a first network device or a second terminal device configures, via first configuration information, multiple power parameters/power parameter offset values, or configures multiple sets of power parameters/power parameter offset values for a first terminal device. For instance, the network may configure X power parameter offset values/X sets of power parameter offset values, where one codepoint corresponds to one power parameter offset value/one set of power parameter offset values. For example, the network may configure X-1 power parameter offset values, where one codepoint corresponds to a power parameter offset value of 0 (i.e., no power parameter offset), and each of the other X-1 codepoints respectively corresponds to one power parameter offset value/one set of power parameter offset values. For example, the network may configure K6 power parameter offset values/K6 sets of power parameter offset values (K6 < X-1), where one codepoint corresponds to a power parameter offset value of 0 (i.e., no power parameter offset), each of the other K6-1 codepoints corresponds to one power parameter offset value/one set of power parameter offset values, and the remaining X-K6 codepoints may be reserved and not used; alternatively, the remaining X-K6 codepoints may correspond to a fixed power parameter offset value (e.g., 0) according to protocol specifications; or, the remaining X-K6 codepoints may correspond to one specific value among the K6 power parameter offset values according to protocol specifications.

The correspondence between codepoints and power parameters/power parameter offset values can be implemented in various methods, for example, which codepoint corresponds to which power parameter/power parameter offset value or which set of power parameters/power parameter offset values can be determined according to predetermined rules (such as protocol specification, network configuration, etc.).

In another implementation example, the protocol specifies the power parameter/power parameter offset value corresponding to each first value (i.e., each codepoint). The power parameter offset value corresponding to one or more codepoints may be 0 (i.e., no power parameter offset).

In the above examples, the power parameter offset value may refer to an increase or decrease relative to a certain power parameter, e.g., if a certain power parameter is A and the power parameter offset value is D (D can be a positive number, a negative number, or 0), then the offset power parameter is A + D. The power corresponding to the first DMRS is calculated based on A + D.

Herein, the first terminal device may determine the power parameter (i.e., corresponding to A described above) based on second indication information, increase or decrease the power parameter by the power parameter offset (D), and then calculate the power corresponding to the first DMRS based on the offset power parameter (i.e., A + D). The second indication information may be transmitted via RRC signaling and/or MAC CE signaling.

One implementation example is: the first terminal device receives third indication information sent by the first network device or the second terminal device, where the third indication information indicates multiple first power parameters. The first field may have one or more first values (i.e., one codepoint or multiple codepoints), and each first value respectively indicates one first power parameter among the multiple first power parameters. For example, if the third indication information indicates K7 first power parameters, then K7 codepoints respectively correspond to one first power parameter among the K7 first power parameters. The remaining X-K7 (or X-K7-1, where said "1" codepoint may correspond to a fixed value, e.g., 0) codepoints may be reserved and not used; alternatively, the remaining X-K7 codepoints correspond to a fixed power parameter (e.g., the fixed power parameter may be a fixed power offset value, and the fixed power offset value is 0) according to protocol specifications; or, the remaining X-K7 (or X-K7-1, where said "1" codepoint may correspond to a fixed value, e.g., 0) codepoints correspond to one specific value among the K7 first power parameters according to protocol specifications.

Another implementation example is: the first terminal device receives third indication information sent by the first network device or the second terminal device, where the third indication information indicates multiple sets of first power parameters. The first field may have one or more first values (i.e., one codepoint or multiple codepoints), and each first value respectively indicates one set of first power parameters among the multiple sets of first power parameters. For example, if the third indication information indicates K8 sets of first power parameters, then K8 codepoints respectively correspond to one set of first power parameters among the K8 sets of first power parameters. The remaining X-K8 (or X-K8-1, where said "1" codepoint may correspond to a fixed set of parameters) codepoints may be reserved and not used; alternatively, the remaining X-K8 codepoints correspond to a fixed set of power parameters according to protocol specifications; or, the remaining X-K8 (or X-K8-1, where said "1" codepoint may correspond to a fixed set of parameters) codepoints correspond to one specific set among the K8 sets of first power parameters according to protocol specifications.

Through the above process, the first terminal device can determine the power of the first DMRS, and transmit and/or receive signals according to this power.

Furthermore, before receiving the first indication information, the first terminal device may also report its own capabilities to the first network device or the second terminal device. For example, the first terminal device sends at least one of a first terminal capability, a second terminal capability, and a third terminal capability. The specific sending method can refer to the foregoing description and will not be elaborated upon here.

### Embodiment 5

This embodiment describes the usage of the power information.

In the first indication information received by a first terminal device, a first field may indicate one piece or a set of power information of a first DMRS, or indicate one piece or a set of power information of a second DMRS.

For multiple transmission data streams (e.g., layers), when the first field indicates one piece of power information, each data stream may determine its power based on this piece of power information.

For multiple transmission data streams (e.g., layers), when the first field indicates a set of power information, each data stream may determine its power based on one piece of power information from the set.

For example, the first field indicates one power offset value. This power offset value may be applicable to all transmission data streams (layers), and each of the multiple data streams determines its power based on this power offset value.

For another example, the first field indicates a set of power offset values. Different power offset values in the set may be respectively applicable to different transmission data streams (layers).

In one example, the first field indicates a set of power offset values, where the set includes 4 values. If the current transmission has only 2 data streams (layers), the first power offset value and the second power offset value from the set are used to determine the power for the first data stream and the second data stream, respectively.

In another example, the first field indicates a set of power offset values, where the set includes 4 values. If the current transmission has only 1 data stream (layer), the first power offset value from the set is used to determine the power for the first data stream.

In another example, the first field indicates a set of power offset values, where the set includes 4 values. If the current transmission has 4 data streams (layers), the first, second, third, and fourth power offset values from the set are used to determine the power for the first, second, third, and fourth data streams, respectively.

The details described in this embodiment is applicable to the foregoing Embodiments 1 to 4.

FIG. 4 is a schematic block diagram of a first terminal device 400 according to an embodiment of the disclosure. The first terminal device 400 may include: a first transceiver module 410, configured to receive first indication information, where the first indication information indicates a first DMRS and/or power information of the first DMRS; and transmit and/or receive data according to the first indication information.

In one implementation, one or more REs used for the first DMRS are the same as REs used for data.

In one implementation, the first indication information includes a first field, and the first field indicates the first DMRS and/or the power information of the first DMRS.

In one implementation, when a value of the first field is a first value, the first field indicates the first DMRS and/or the power information of the first DMRS.

In one implementation, when the value of the first field is a second value, the first field indicates a second DMRS and/or power information of the second DMRS.

In one implementation, when the value of the first field is the first value, data transmission employs the first DMRS; and when the value of the first field is the second value, data transmission employs the second DMRS.

In one implementation, the first indication information further includes a second field, and the second field indicates that data transmission employs the first DMRS and/or the second DMRS.

In one implementation, in a case where the second field indicates that data transmission employs the first DMRS, the first field indicates the first DMRS and/or the power information of the first DMRS.

In one implementation, in a case where the second field indicates that data transmission employs the second DMRS, the first field indicates the second DMRS and/or the power information of the second DMRS.

In one embodiment, when the second field indicates that data transmission employs the second DMRS, the first field is ignored, or the first field indicates a pre-defined value.

In one example, the value of the first field is only a first value, in which case the first field indicates power information of the first DMRS.

In one embodiment, when the second field indicates that data transmission employs the first DMRS and the second DMRS, the first field indicates p the first DMRS and/or ower information of the first DMRS.

In one embodiment, the REs used for the second DMRS are different from the REs used for data.

In one embodiment, the first transceiver module 410 is configured to: determine power of the first DMRS according to power information of the first DMRS; transmit and/or receive data according to the power of the first DMRS.

In one embodiment, the power information of the first DMRS includes: one or one set of power offset values of the first DMRS.

In one embodiment, the first transceiver module 410 is configured to: determine the power of the first DMRS according to first power and the one or one set of power offset values of the first DMRS.

In one embodiment, the first transceiver module 410 is further configured to receive first configuration information, the first configuration information configuring multiple or multiple sets of power offset values; the one or one set of power offset values of the first DMRS is one or one set of power offset values among the multiple or multiple sets of power offset values.

In one embodiment, the first transceiver module 410 is further configured to receive second indication information, the first power being determined according to the second indication information.

In one embodiment, the second indication information is transmitted via RRC signaling and/or MAC CE signaling.

In one embodiment, the first power includes power corresponding to the first DMRS during a previous data transmission.

In one embodiment, the power information of the first DMRS includes: one or one set of power parameters of the first DMRS.

In one embodiment, the first transceiver module 410 is configured to: determine the power of the first DMRS according to the one or one set of power parameters of the first DMRS.

In one embodiment, the first transceiver module 410 is further configured to receive third indication information, the third indication information configuring multiple or multiple sets of power parameters; the one or one set of power parameters of the first DMRS is one or one set of power parameters among the multiple or multiple sets of power parameters.

In one embodiment, the third indication information is transmitted via RRC signaling and/or MAC CE signaling.

In one embodiment, the first transceiver module 410 is configured to: receive the first indication information sent by a first network device or a second terminal device.

In one embodiment, the first indication information is transmitted via DCI signaling and/or MAC CE signaling.

In one embodiment, the first transceiver module 410 is further configured to: transmit a first terminal capability, the first terminal capability indicating that the first terminal device supports the first DMRS.

In one embodiment, the first terminal capability is transmitted via RRC signaling and/or MAC CE.

In one embodiment, the first transceiver module 410 is further configured to transmit a second terminal capability, the second terminal capability indicating that the first terminal device supports indicating the power information of the first DMRS via the first indication information.

In one embodiment, the second terminal capability is transmitted via RRC signaling and/or MAC CE.

In one embodiment, the first transceiver module 410 is further configured to transmit a third terminal capability, the third terminal capability indicating that the first terminal device supports indicating the power information of the first DMRS and/or the power information of the second DMRS via the first indication information, or the third terminal capability indicating that the first terminal device supports indicating the first DMRS and/or the second DMRS via the first indication information.

In one embodiment, the third terminal capability is transmitted via RRC signaling and/or MAC CE.

The first terminal device 400 of the embodiment of the disclosure can implement the corresponding functions of the first terminal device in the aforementioned method embodiments. The processes, functions, implementation methods, and beneficial effects corresponding to each module (sub-module, unit, or component, etc.) in the first terminal device 400 can be found in the corresponding descriptions in the above method embodiments, and will not be repeated here. It should be noted that the functions described for each module (sub-module, unit, or component, etc.) of the first terminal device 400 of the embodiment of the application may be implemented by different modules (sub-modules, units, or components, etc.), or may be implemented by the same module (sub-module, unit, or component, etc.).

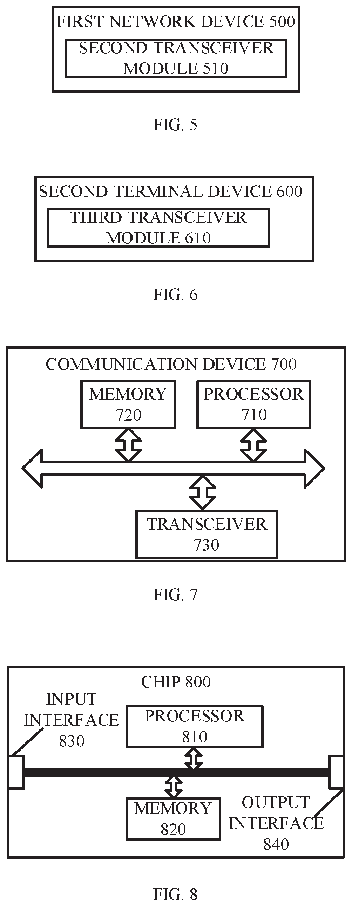

FIG. 5 is a schematic block diagram of a first network device 500 according to an embodiment of the disclosure. The first network device 500 may include: a second transceiver module 510, configured to send first indication information, the first indication information indicating a first DMRS and/or power information of the first DMRS.

In one embodiment, one or more REs used for the first DMRS are the same as REs used for data.

In one embodiment, the first indication information includes a first field, the first field indicating the first DMRS and/or power information of the first DMRS.

In one embodiment, when the value of the first field is a first value, the first field indicates the first DMRS and/or power information of the first DMRS.

In one embodiment, when the value of the first field is a second value, the first field indicates the second DMRS and/or power information of the second DMRS.

In one embodiment, when the value of the first field is a first value, data transmission uses a first DMRS; when the value of the first field is a second value, data transmission uses a second DMRS.

In one embodiment, the first indication information further includes a second field, the second field indicating that data transmission uses the first DMRS and/or the second DMRS.

In one embodiment, in a case where the second field indicates that data transmission uses the first DMRS, the first field indicates power information of the first DMRS.

In one embodiment, in a case where the second field indicates that data transmission uses the second DMRS, the first field indicates power information of the second DMRS.

In one embodiment, in a case where the second field indicates that data transmission uses the second DMRS, the first field is ignored, or the first field indicates a pre-specified value.

In one embodiment, in a case where the second field indicates that data transmission uses the first DMRS and the second DMRS, the first field indicates power information of the first DMRS.

In one embodiment, REs used by the second DMRS are different from REs used by data.

In one embodiment, the second transceiver module 510 is further configured to send and/or receive data according to the first DMRS and/or the power information of the first DMRS.

In one embodiment, the second transceiver module 510 is configured to: determine power of the first DMRS according to the power information of the first DMRS; send and/or receive data according to the power of the first DMRS.

In one embodiment, the power information of the first DMRS includes: one or a set of power offset values of the first DMRS.

In one embodiment, the second transceiver module 510 is configured to: determine the power of the first DMRS according to a first power and the one or one set of power offset values of the first DMRS.

In one embodiment, the second transceiver module 510 is further configured to send first configuration information, the first configuration information configuring multiple or multiple sets of power offset values; the one or one set of power offset values of the first DMRS is one or one set of power offset values among the multiple or multiple sets of power offset values.

In one embodiment, the second transceiver module 510 is further configured to send second indication information, the second indication information indicating a first power.

In one embodiment, the second indication information is transmitted via RRC signaling and/or MAC CE signaling.

In one embodiment, the first power includes a power corresponding to the first DMRS during a previous data transmission.

In one embodiment, the power information of the first DMRS includes: one or one set of power parameters of the first DMRS.

In one embodiment, the second transceiver module 510 is configured to: determine the power of the first DMRS according to the one or one set of power parameters of the first DMRS.

In one embodiment, the second transceiver module 510 is further configured to send third indication information, the third indication information configuring multiple or multiple sets of power parameters; the one or one set of power parameters of the first DMRS is one or one set of power parameters among the multiple or multiple sets of power parameters.

In one embodiment, the third indication information is transmitted via RRC signaling and/or MAC CE signaling.

In one embodiment, the first indication information is transmitted via DCI signaling and/or MAC CE signaling.

In one embodiment, the second transceiver module 510 is further configured to receive a first terminal capability sent by a first terminal device, the first terminal capability indicating that the first terminal device supports the first DMRS.

In one embodiment, the first terminal capability is transmitted via RRC signaling and/or MAC CE.

In one embodiment, the second transceiver module 510 is further configured to receive a second terminal capability sent by the first terminal device, the second terminal capability indicating that the first terminal device supports indicating the power information of the first DMRS via the first indication information.

In one embodiment, the second terminal capability is transmitted via RRC signaling and/or MAC CE.

In one embodiment, the second transceiver module 510 is further configured to receive a third terminal capability sent by the first terminal device, the third terminal capability indicating that the first terminal device supports indicating the power information of the first DMRS and/or the power information of the second DMRS via the first indication information, or the third terminal capability indicating that the first terminal device supports indicating the first DMRS and/or the second DMRS via the first indication information.

In one embodiment, the third terminal capability is transmitted via RRC signaling and/or MAC CE.

The first network device 500 of the embodiment of the disclosure can implement the corresponding functions of the first network device in the aforementioned method embodiments. The processes, functions, implementation methods, and beneficial effects corresponding to each module (sub-module, unit, or component, etc.) in the first network device 500 can be found in the corresponding descriptions in the above method embodiments, and will not be repeated here. It should be noted that the functions described for each module (sub-module, unit, or component, etc.) in the first network device 500 of the embodiment of the disclosure can be implemented by different modules (sub-modules, units, or components, etc.), or can be implemented by the same module (sub-module, unit, or component, etc.).

FIG. 6 is a schematic block diagram of a second terminal device 600 according to an embodiment of the disclosure. The second terminal device 600 may include a third transceiver module 610, which is configured to send first indication information, the first indication information indicating a first DMRS and/or power information of the first DMRS.

In one embodiment, one or more REs used by the first DMRS are the same as REs used by data.

In one embodiment, the first indication information includes a first field, the first field indicating the first DMRS and/or the power information of the first DMRS.

In one embodiment, when a value of the first field is a first value, the first field indicates the first DMRS and/or the power information of the first DMRS.

In one embodiment, when the value of the first field is a second value, the first field indicates a second DMRS and/or power information of the second DMRS.

In one embodiment, when the value of the first field is the first value, data transmission uses the first DMRS; when the value of the first field is the second value, data transmission uses the second DMRS.

In one embodiment, the first indication information further includes a second field, the second field indicating that data transmission uses the first DMRS and/or the second DMRS.

In one embodiment, in a case where the second field indicates that data transmission uses the first DMRS, the first field indicates the power information of the first DMRS.

In one embodiment, in a case where the second field indicates that data transmission uses the second DMRS, the first field indicates the power information of the second DMRS.

In one embodiment, in a case where the second field indicates that data transmission uses the second DMRS, the first field is ignored, or the first field indicates a pre-specified value.

In one embodiment, in a case where the second field indicates that data transmission uses the first DMRS and the second DMRS, the first field indicates power information of the first DMRS.

In one embodiment, REs used by the second DMRS are different from REs used by data.

In one embodiment, the third transceiver module 610 is further configured to send and/or receive data according to the first DMRS and/or the power information of the first DMRS.

In one embodiment, the third transceiver module 610 is configured to: determine a power of the first DMRS according to the power information of the first DMRS; send and/or receive data according to the power of the first DMRS.

In one embodiment, the power information of the first DMRS includes: one or one set of power offset values of the first DMRS.

In one embodiment, the third transceiver module 610 is configured to: determine the power of the first DMRS according to a first power and the one or one set of power offset values of the first DMRS.

In one embodiment, the third transceiver module 610 is further configured to send first configuration information, the first configuration information configuring multiple or multiple sets of power offset values; the one or one set of power offset values of the first DMRS is one or one set of power offset values among the multiple or multiple sets of power offset values.

In one embodiment, the third transceiver module 610 is further configured to send second indication information, the second indication information indicating a first power.

In one embodiment, the second indication information is transmitted via RRC signaling and/or MAC CE signaling.

In one embodiment, the first power includes a power corresponding to the first DMRS during a previous data transmission.

In one embodiment, the power information of the first DMRS includes: one or one set of power parameters of the first DMRS.

In one embodiment, the third transceiver module 610 is configured to: determine the power of the first DMRS according to the one or one set of power parameters of the first DMRS.

In one embodiment, the third transceiver module 610 is further configured to send third indication information, the third indication information configuring multiple or multiple sets of power parameters; the one or one set of power parameters of the first DMRS is one or one set of power parameters among the multiple or multiple sets of power parameters.

In one embodiment, the third indication information is transmitted via RRC signaling and/or MAC CE signaling.

In one embodiment, the first indication information is transmitted via DCI signaling and/or MAC CE signaling.

In one embodiment, the third transceiver module 610 is further configured to receive a first terminal capability sent by a first terminal device, the first terminal capability indicating that the first terminal device supports the first DMRS.

In one embodiment, the first terminal capability is transmitted via RRC signaling and/or MAC CE.

In one embodiment, the third transceiver module 610 is further configured to receive a second terminal capability sent by the first terminal device, the second terminal capability indicating that the first terminal device supports indicating the power information of the first DMRS via the first indication information.

In one embodiment, the second terminal capability is transmitted via RRC signaling and/or MAC CE.

In one embodiment, the third transceiver module 610 is further configured to receive a third terminal capability sent by the first terminal device, the third terminal capability indicating that the first terminal device supports indicating the power information of the first DMRS and/or the power information of the second DMRS via the first indication information, or the third terminal capability indicating that the first terminal device supports indicating the first DMRS and/or the second DMRS via the first indication information.

In one embodiment, the third terminal capability is transmitted via RRC signaling and/or MAC CE.

The second terminal device 600 of the embodiment of the disclosure can implement the corresponding functions of the second terminal device in the aforementioned method embodiments. The processes, functions, implementation methods, and beneficial effects corresponding to each module (sub-module, unit, or component, etc.) in the second terminal device 600 can be found in the corresponding descriptions in the above method embodiments, and will not be repeated here. It should be noted that the functions described for each module (sub-module, unit, or component, etc.) in the second terminal device 600 of the embodiment of the application can be implemented by different modules (sub-modules, units, or components, etc.), or can be implemented by the same module (sub-module, unit, or component, etc.).

FIG. 7 is a schematic structural diagram of a communication device 700 according to an embodiment of the disclosure. The communication device 700 includes a processor 710, and the processor 710 can invoke and run a computer program from a memory, so that the communication device 700 implements the method in the embodiment of the disclosure.

In one embodiment, the communication device 700 may further include a memory 720. The processor 710 can invoke and run the computer program from the memory 720, so that the communication device 700 implements the method in the embodiment of the disclosure.

The memory 720 may be a separate device independent of the processor 710, or may be integrated into the processor 710.

In one embodiment, the communication device 700 may further include a transceiver 730, and the processor 710 may control the transceiver 730 to communicate with other devices. Specifically, it may send information or data to other devices, or receive information or data sent by other devices.

The transceiver 730 may include a transmitter and a receiver. The transceiver 730 may further include antennas, and the number of antennas may be one or more.

In one embodiment, the communication device 700 may be a network device of an embodiment of the disclosure, and the communication device 700 can implement the corresponding processes implemented by the network device in various methods of the embodiments of the disclosure. For brevity, details are not repeated here.

In one embodiment, the communication device 700 may be a terminal device of an embodiment of the disclosure, and the communication device 700 can implement the corresponding processes implemented by the terminal device in various methods of the embodiments of the disclosure. For brevity, details are not repeated here.

FIG. 8 is a schematic structural diagram of a chip 800 according to an embodiment of the disclosure. The chip 800 includes a processor 810, and the processor 810 can call and run a computer program from a memory to implement the method in the embodiment of the disclosure.

In one embodiment, the chip 800 may further include a memory 820. The processor 810 can call and run the computer program from the memory 820 to implement the method executed by the terminal device or the network device in the embodiment of the disclosure.

The memory 820 may be a separate device independent of the processor 810, or may be integrated into the processor 810.

In one embodiment, the chip 800 may further include an input interface 830. The processor 810 can control the input interface 830 to communicate with other devices or chips, and specifically, can obtain information or data sent by other devices or chips.

In one embodiment, the chip 800 may further include an output interface 840. The processor 810 can control the output interface 840 to communicate with other devices or chips, and specifically, can output information or data to other devices or chips.

In one embodiment, the chip can be applied to a network device in an embodiment of the disclosure, and the chip can implement the corresponding processes implemented by the network device in various methods of the embodiments of the disclosure. For brevity, details are not repeated here.

In one embodiment, the chip can be applied to a terminal device in an embodiment of the disclosure, and the chip can implement the corresponding processes implemented by the terminal device in various methods of the embodiments of the disclosure. For brevity, details are not repeated here.

The chips applied to the network device and the terminal device may be the same chip or different chips.

It should be understood that the chip mentioned in the embodiments of the disclosure may also be referred to as a system-on-chip, a system on chip, a chip system, or a system-on-chip chip, etc.

The above-mentioned processor may be a general-purpose processor, a digital signal processor (DSP), a field programmable gate array (FPGA), an application specific integrated circuit (ASIC), or other programmable logic devices, transistor logic devices, discrete hardware components, etc. The above-mentioned general-purpose processor may be a microprocessor or any conventional processor, etc.

The above-mentioned memory may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM).

It should be understood that the above memory is exemplary but not restrictive. For example, the memory in the embodiments of the disclosure may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct rambus random access memory (DR RAM), etc. That is, the memory in the embodiments of the disclosure is intended to include, but is not limited to, these and any other suitable types of memories.

In the above embodiments, they may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions according to the embodiments of the disclosure are generated in whole or in part. The computer may be a general-purpose computer, a special-purpose computer, a computer network, or other programmable devices. The computer instructions may be stored in a computer-readable storage medium or transmitted from one computer-readable storage medium to another. For example, the computer instructions may be transmitted from one website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer, or a data storage device such as a server or a data center integrated with one or more available media. The available medium may be a magnetic medium (e.g., a floppy disk, a hard disk, a magnetic tape), an optical medium (e.g., a DVD), or a semiconductor medium (e.g., a solid state disk (SSD)), etc.

It should be understood that, in various embodiments of the disclosure, the size of the sequence numbers of the above processes does not imply an order of execution, and the execution order of each process should be determined by its function and internal logic, and should not constitute any limitation on the implementation process of the embodiments of the disclosure.

A person skilled in the art can clearly understand that, for the convenience and brevity of description, the specific working processes of the systems, devices, and units described above can refer to the corresponding processes in the aforementioned method embodiments, and will not be repeated here.

The above are only specific embodiments of the disclosure, but the protection scope of the disclosure is not limited thereto. Any person skilled in the art can easily think of changes or substitutions within the technical scope disclosed in the disclosure, which should be covered within the protection scope of the disclosure. Therefore, the protection scope of the disclosure shall be subject to the protection scope of the claims.

## Claims

1. A power indication method, comprising:
receiving, by a first terminal device, first indication information, wherein the first indication information indicates a first demodulation reference signal (DMRS) and/or power information of the first DMRS; and
sending and/or receiving, by the first terminal device, data according to the first indication information.

2. The method according to claim 1, wherein one or more resource elements (REs) used for the first DMRS are the same as REs used for data.

3. The method according to claim 1 or 2, wherein the first indication information comprises a first field, and the first field indicates the first DMRS and/or the power information of the first DMRS.

4. The method according to claim 3, wherein when a value of the first field is a first value, the first field indicates the first DMRS and/or the power information of the first DMRS.

5. The method according to claim 3 or 4, wherein when the value of the first field is a second value, the first field indicates a second DMRS and/or power information of the second DMRS.

6. The method according to claim 5, wherein:
when the value of the first field is the first value, data transmission employs the first DMRS; and
when the value of the first field is the second value, data transmission employs the second DMRS.

7. The method according to claim 3, wherein the first indication information further comprises a second field, and the second field indicates that data transmission employs the first DMRS and/or a second DMRS.

8. The method according to claim 7, wherein in a case where the second field indicates that data transmission employs the first DMRS, the first field indicates the power information of the first DMRS.

9. The method according to claim 7, wherein in a case where the second field indicates that data transmission employs the second DMRS, the first field indicates power information of the second DMRS.

10. The method according to claim 7, wherein in a case where the second field indicates that data transmission employs the second DMRS, the first field is ignored, or the first field indicates a predefined value.

11. The method according to claim 7, wherein in a case where the second field indicates that data transmission employs the first DMRS and the second DMRS, the first field indicates the power information of the first DMRS.

12. The method according to any one of claims 5-11, wherein REs used for the second DMRS are different from REs used for data.

13. The method according to any one of claims 3-12, wherein sending and/or receiving, by the first terminal device, data according to the first indication information comprises:
determining, by the first terminal device, power of the first DMRS according to the power information of the first DMRS; and
sending and/or receiving, by the first terminal device, data according to the power of the first DMRS.

14. The method according to claim 13, wherein the power information of the first DMRS comprises: one or one set of power offset values for the first DMRS.

15. The method according to claim 14, wherein the determining, by the first terminal device, the power of the first DMRS according to the power information of the first DMRS comprises:
determining, by the first terminal device, the power of the first DMRS according to first power and the one or one set of power offset values for the first DMRS.

16. The method according to claim 14 or 15, further comprising:
receiving, by the first terminal device, first configuration information, wherein the first configuration information configures multiple power offset values or multiple sets of power offset values; and the one or one set of power offset values for the first DMRS is one or one set of power offset values from the multiple power offset values or the multiple sets of power offset values.

17. The method according to claim 15, further comprising:
receiving, by the first terminal device, second indication information, wherein the first power is determined according to the second indication information.

18. The method according to claim 17, wherein the second indication information is transmitted via radio resource control (RRC) signaling and/or medium access control element (MAC CE) signaling.

19. The method according to claim 15, wherein the first power comprises power corresponding to the first DMRS in a previous data transmission.

20. The method according to claim 13, wherein the power information of the first DMRS comprises: one or one set of power parameters of the first DMRS.

21. The method according to claim 20, wherein the determining, by the first terminal device, the power of the first DMRS according to the power information of the first DMRS comprises:
determining, by the first terminal device, the power of the first DMRS according to the one or one set of power parameters of the first DMRS.

22. The method according to claim 20 or 21, further comprising:
receiving, by the first terminal device, third indication information, wherein the third indication information configures multiple power parameters or multiple sets of power parameters; and the one or one set of power parameters of the first DMRS is one or one set of power parameters from the multiple power parameters or the multiple sets of power parameters.

23. The method according to claim 22, wherein the third indication information is transmitted via RRC signaling and/or MAC CE signaling.

24. The method according to any one of claims 1-23, wherein the receiving, by the first terminal device, the first indication information comprises:
receiving, by the first terminal device, the first indication information sent by a first network device or a second terminal device.

25. The method according to any one of claims 1-24, wherein the first indication information is transmitted via downlink control information (DCI) signaling and/or MAC CE signaling.

26. The method according to any one of claims 1-25, wherein before receiving, by the first terminal device, the first indication information, the method further comprises:
sending, by the first terminal device, first terminal capability, wherein the first terminal capability indicates that the first terminal device supports the first DMRS.

27. The method according to claim 26, wherein the first terminal capability is transmitted via RRC signaling and/or MAC CE.

28. The method according to any one of claims 1-27, wherein before receiving, by the first terminal device, the first indication information, the method further comprises:
sending, by the first terminal device, second terminal capability, wherein the second terminal capability indicates that the first terminal device supports indicating the power information of the first DMRS via the first indication information.

29. The method according to claim 28, wherein the second terminal capability is transmitted via RRC signaling and/or MAC CE.

30. The method according to any one of claims 1-29, wherein before receiving, by the first terminal device, the first indication information, the method further comprises:
sending, by the first terminal device, third terminal capability, wherein the third terminal capability indicates that the first terminal device supports indicating the power information of the first DMRS and/or power information of a second DMRS via the first indication information, or the third terminal capability indicates that the first terminal device supports indicating the first DMRS and/or a second DMRS via the first indication information.

31. The method according to claim 30, wherein the third terminal capability is transmitted via RRC signaling and/or MAC CE.

32. A power indication method, comprising:
transmitting, by a first network device or a second terminal device, first indication information, wherein the first indication information indicates a first demodulation reference signal (DMRS) and/or power information of the first DMRS.

33. The method according to claim 32, wherein one or more resource elements (REs) used for the first DMRS are the same as REs used for data.

34. The method according to claim 32 or 33, wherein the first indication information comprises a first field, and the first field indicates the first DMRS and/or the power information of the first DMRS.

35. The method according to claim 34, wherein when a value of the first field is a first value, the first field indicates the first DMRS and/or the power information of the first DMRS.

36. The method according to claim 34 or 35, wherein when the value of the first field is a second value, the first field indicates a second DMRS and/or power information of the second DMRS.

37. The method according to claim 36, wherein:
when the value of the first field is the first value, data transmission employs the first DMRS; and
when the value of the first field is the second value, data transmission employs the second DMRS.

38. The method according to claim 34, wherein the first indication information further comprises a second field, and the second field indicates that data transmission employs the first DMRS and/or a second DMRS.

39. The method according to claim 38, wherein in a case where the second field indicates that data transmission employs the first DMRS, the first field indicates the power information of the first DMRS.

40. The method according to claim 38, wherein in a case where the second field indicates that data transmission employs the second DMRS, the first field indicates power information of the second DMRS.

41. The method according to claim 38, wherein in a case where the second field indicates that data transmission employs the second DMRS, the first field is ignored, or the first field indicates a predefined value.

42. The method according to claim 38, wherein in a case where the second field indicates that data transmission employs the first DMRS and the second DMRS, the first field indicates the power information of the first DMRS.

43. The method according to any one of claims 37-42, wherein REs used for the second DMRS are different from REs used for data.

44. The method according to any one of claims 34-43, further comprising:
sending and/or receiving, by the first network device or the second terminal device, data according to the first DMRS and/or the power information of the first DMRS.

45. The method of claim 44, wherein sending and/or receiving, by the first network device or the second terminal device, data according to the first DMRS and/or the power information of the first DMRS comprises:
determining, by the first network device or the second terminal device, power of the first DMRS according to the power information of the first DMRS;
sending and/or receiving, by the first network device or the second terminal device, data according to the power of the first DMRS.

46. The method according to claim 45, wherein the power information of the first DMRS comprises: one or one set of power offset values for the first DMRS.

47. The method according to claim 46, wherein the determining, by the first network device or the second terminal device, power of the first DMRS according to the power information of the first DMRS comprises:
determining, by the first network device or the second terminal device, the power of the first DMRS according to first power and the one or one set of power offset values for the first DMRS.

48. The method according to claim 46 or 47, further comprising:
transmitting, by the first network device or the second terminal device, first configuration information, wherein the first configuration information configures multiple power offset values or multiple sets of power offset values; and the one or one set of power offset values for the first DMRS is one or one set of power offset values from the multiple power offset values or the multiple sets of power offset values.

49. The method according to claim 47, further comprising:
transmitting, by the first network device or the second terminal device, second indication information, wherein the second indication information indicates the first power.

50. The method according to claim 49, wherein the second indication information is transmitted via radio resource control (RRC) signaling and/or medium access control element (MAC CE) signaling.

51. The method according to claim 47, wherein the first power comprises power corresponding to the first DMRS in a previous data transmission.

52. The method according to claim 45, wherein the power information of the first DMRS comprises: one or one set of power parameters of the first DMRS.

53. The method according to claim 52, wherein the determining, by the first network device or the second terminal device, the power of the first DMRS according to the power information of the first DMRS comprises:
determining, by the first network device or the second terminal device, the power of the first DMRS according to the one or one set of power parameters of the first DMRS.

54. The method according to claim 52 or 53, further comprising:
transmitting, by the first network device or the second terminal device, third indication information, wherein the third indication information configures multiple power parameters or multiple sets of power parameters; and the one or one set of power parameters of the first DMRS is one or one set of power parameters from the multiple power parameters or the multiple sets of power parameters.

55. The method according to claim 54, wherein the third indication information is transmitted via RRC signaling and/or MAC CE signaling.

56. The method according to any one of claims 32-55, wherein the first indication information is transmitted through DCI signaling and/or MAC CE signaling.

57. The method according to any one of claims 32-56, wherein before sending, by the first network device or the second terminal device, the first indication information, the method further comprises:
receiving, by the first network device or the second terminal device, first terminal capability sent by a first terminal device, wherein the first terminal capability indicates that the first terminal device supports the first DMRS.

58. The method according to claim 57, wherein the first terminal capability is transmitted via RRC signaling and/or MAC CE.

59. The method according to any one of claims 32-58, wherein before sending, by the first network device or the second terminal device, the first indication information, the method further comprises:
receiving, by the first network device or the second terminal device, second terminal capability sent by a first terminal device, wherein the second terminal capability indicates that the first terminal device supports indicating power information of the first DMRS via the first indication information.

60. The method according to claim 59, wherein the second terminal capability is transmitted via RRC signaling and/or MAC CE.

61. The method according to any one of claims 32-60, wherein before sending, by the first network device or the second terminal device, the first indication information, the method further comprises:
receiving, by the first network device or the second terminal device, third terminal capability sent by a first terminal device, wherein the third terminal capability indicates that the first terminal device supports indicating power information of the first DMRS and/or power information of a second DMRS via the first indication information, or the third terminal capability indicates that the first terminal device supports indicating the first DMRS and/or a second DMRS via the first indication information.

62. The method according to claim 61, wherein the third terminal capability is transmitted via RRC signaling and/or MAC CE.

63. A first terminal device, comprising:
a first transceiver module, configured to receive first indication information, wherein the first indication information indicates a first DMRS and/or power information of the first DMRS; and send and/or receive data according to the first indication information.

64. A first network device, comprising:
a second transceiver module, configured to send first indication information, wherein the first indication information indicates a first DMRS and/or power information of the first DMRS.

65. A second terminal device, comprising:
a third transceiver module, configured to send first indication information, wherein the first indication information indicates a first DMRS and/or power information of the first DMRS.

66. A communication device, comprising: a processor, a memory, and a transceiver, wherein the memory is configured to store a computer program, the processor is configured to invoke and run the computer program stored in the memory, and control the transceiver to perform the method according to any one of claims 1 to 31 or 32 to 62.

67. A chip, comprising: a processor configured to invoke and run a computer program from a memory, so that a device equipped with the chip performs the method according to any one of claims 1 to 31 or 32 to 62.

68. A computer-readable storage medium, configured to store a computer program, wherein when the computer program is run by a device, the device performs the method according to any one of claims 1 to 31 or 32 to 62.

69. A computer program product, comprising computer program instructions, wherein the computer program instructions cause a computer to perform the method according to any one of claims 1 to 31 or 32 to 62.

70. A computer program, wherein the computer program causes a computer to perform the method according to any one of claims 1 to 31 or 32 to 62.
